# EUROPÄISCHE PATENTSCHRIFT

(11) **EP 4 103 433 B1**
(45) Veröffentlichungstag und Bekanntmachung des Hinweises auf die Patenterteilung: **27.09.2023**
(21) Anmeldenummer: 20707370.1
(22) Anmeldetag: 14.02.2020
(51) Int. Cl.: B60T 7/12

(54) **VERFAHREN ZUM ABBREMSEN EINES FAHRZEUGES ZUR BEFÖRDERUNG VON FAHRGÄSTEN, STEUEREINHEIT SOWIE FAHRZEUG ZUR BEFÖRDERUNG VON FAHRGÄSTEN**
METHOD FOR BRAKING A PASSENGER VEHICLE, CONTROL UNIT AND PASSENGER VEHICLE
PROCÉDÉ POUR FREINER UN VÉHICULE DE TRANSPORT PASSAGERS ,UNITÉ DE COTRÔLE ET VÉHICULE DE TRANSPORT PASSAGERS

(43) Veröffentlichungstag der Anmeldung: 21.12.2022
(73) Patentinhaber: ZF CV Systems Global GmbH, 3006 Bern (CH)
(72) Erfinder: MATTHAEI, Richard, 31789 Hameln (DE); DIECKMANN, Thomas, 30982 Pattensen (DE); KAMISCHKE, Waldemar, 31535 Neustadt (DE); RICKE, Janik, 31311 Uetze (DE)
(74) Vertreter: Schäferjohann, Volker
(86) Internationale Anmeldenummer: PCT/EP2020/053929
(87) Internationale Veröffentlichungsnummer: WO 2021/160287

(56) Entgegenhaltungen:
- EP-A2- 0 894 684
- DE-A1- 19 633 834
- DE-A1-102015 013 855
- DE-B3-102018 004 303

## Beschreibung

Die Erfindung betrifft ein Verfahren zum Abbremsen eines Fahrzeuges zur Beförderung von Fahrgästen, insbesondere eines straßengebundenen Fahrzeuges zum Transportieren von stehenden und/oder nicht-angeschnallten Fahrgästen, beispielsweise eines Busses, sowie eine Steuereinrichtung und ein Fahrzeug zur Beförderung von Fahrgästen, insbesondere ein Bus.

Aus dem Stand der Technik ist bekannt, Fahrzeuge in einer Kaskade bestehend aus einer optischen und akustischen Warnung, einer haptischen Warnung in Form eines für den angeschnallten Fahrer spürbaren Teilbremsvorganges und einer anschließenden Notbremsphase abzubremsen. In DE 10 2008 045 481 A1 wird während des Teilbremsvorganges in der haptischen Warnphase eine gewisse Ist-Eigenverzögerung für das Fahrzeug eingestellt, wobei die Ist-Eigenverzögerung zeitlich kontinuierlich mit einem bestimmten Ist-Ruck ansteigt, so dass sich auch eine kontinuierlich steigende Ist-Eigenverzögerung für das Fahrzeug ergibt. In der Notbremsphase wird das Fahrzeug dann mit einer konstanten Notbremsverzögerung bis in den Stillstand abgebremst, wobei die Ist-Eigenverzögerung zwischen der haptischen Warnphase und der Notbremsphase abrupt ansteigt. In Notbremssituationen kann das Fahrzeug dadurch mit mehreren Warnungen an den angeschnallten Fahrer effizient verzögert und gleichzeitig eine Kollision vermieden bzw. Kollisionsfolgen gemindert werden.

In EP 2 407 358 B1 ist weiterhin beschrieben, dass bei Vorliegen einer Warnbedingung als Auslösekriterium zum Abbremsen des Fahrzeuges im Rahmen einer Notbremsung zunächst ein kurzzeitiges, ruckartiges Abbremsen des Fahrzeuges erfolgt, wobei das Fahrzeug aufgrund des ruckartigen Abbremsens mit einem für den angeschnallten Fahrer spürbaren Ruck kurzzeitig abgebremst wird. Dies dient in diesem Fall der haptischen Warnung an den angeschnallten Fahrer vor der eigentlichen Bremsphase. Nachfolgend wird die Bremsphase eingeleitet, in der das Fahrzeug durch eine sich zeitlich verändernde Soll-Eigenverzögerung in Form von zwei Stufen in zwei Teilbrems-Bereichen über ein Bremssystem abgebremst wird, vorzugsweise bis in den Stillstand, um eine Kollision zu vermeiden.

Weitere Bremsverfahren zur Kollisionsvermeidung sind in EP 2 388 757 B1 und EP 3 326 874 A1 beschrieben.

Für ein Fahrzeug, in dem sich normalerweise stehende und/oder nicht-angeschnallte Fahrgäste befinden, beispielsweise ein Bus, ist diese herkömmliche Kaskade im Hinblick auf die Sicherheit dieser Fahrgäste nicht immer zielführend. Deshalb ist diese Kaskade insbesondere in Bremssituationen zur Kollisionsvermeidung entsprechend an diese Situation anzupassen.

Dazu wird in DE 10 2014 008 431 A1 offenbart, den Fahrer eines Busses bei Vorliegen einer Kollisionswahrscheinlichkeit zunächst optisch und/oder akustisch zu warnen und den Bus anschließend durch Einstellen einer geschwindigkeitsabhängigen Ist-Eigenverzögerung in einer Bremsphase automatisch abzubremsen, wodurch der Fahrer erneut auf die kollisionsvermeidende Maßnahme hingewiesen wird. Dabei wird zu Beginn der Bremsphase abrupt auf eine geschwindigkeitsabhängige, vom Fahrer wahrnehmbare Ist-Eigenverzögerung gesprungen. Nachfolgend kann ausgehend davon eine kontinuierliche Erhöhung der Ist-Eigenverzögerung bis zu einer Maximal-Verzögerung, die etwa der Hälfte einer Notbremsverzögerung entspricht, erfolgen. Eine anschließende Notbremsphase erfolgt nicht, um eine Gefährdung der Fahrgäste zu vermeiden.

Aus dem Dokument EP0894684A2 ist eine Vorrichtung und ein Verfahren zur Verkürzung des Bremsweges bekannt. Darin wird vorgeschlagen, dass die Betätigung der Bremseinrichtung durch Loslassen des Fahrpedals nur für einen begrenzten Zeitraum erfolgt. Wenn der Fahrer das Bremspedal erreicht, wird manuell gebremst.

Nachteilig bei bekannten Verfahren ist, dass die Fahrgäste des Fahrzeuges bei einem abrupten bzw. sprunghaften Anstieg der Ist-Eigenverzögerung stürzen können, da dieser abrupte Anstieg auf eine haptische Warnung des angeschnallten Fahrers abgestimmt ist und sich die Fahrgäste oft nicht an den vorgesehenen Haltemöglichkeiten festhalten und/oder abgelenkt sind. Wird also in der Bremsphase eine sprunghafte Erhöhung der Ist-Eigenverzögerung angefordert, um den angeschnallten Fahrer zu warnen bzw. das Fahrzeug möglichst schnell zum Stillstand zu bringen, kann dies zu gefährlichen Folgesituationen für die Fahrgäste kommen.

Aufgabe der Erfindung ist daher, ein Verfahren anzugeben, mit dem ein Fahrzeug zur Beförderung von Fahrgästen, insbesondere von stehenden und/oder nicht-angeschnallten Fahrgästen in einem straßengebundenen Fahrzeug, sicher und zuverlässig abgebremst werden kann und mit dem gleichzeitig eine erhöhte Sicherheit für die Fahrgäste gewährleistet werden kann. Aufgabe ist es weiterhin, eine Steuereinheit sowie ein Fahrzeug zur Beförderung von Fahrgästen anzugeben.

Diese Aufgabe wird durch ein Verfahren zum Abbremsen eines Fahrzeuges zur Beförderung von Fahrgästen, einer Steuereinheit sowie einem Fahrzeug zur Beförderung von Fahrgästen gemäß den unabhängigen Ansprüchen gelöst. Die Unteransprüche geben bevorzugte Weiterbildungen an.

Erfindungsgemäß ist demnach vorgesehen, dass bei Erfüllen eines Auslösekriteriums ein Konditionierungs-Bremsimpuls durch kurzzeitiges, impulsartiges Abbremsen des Fahrzeuges derartig bewirkt wird, dass die Fahrgäste des Fahrzeuges ein kurzzeitiges, zeitlich begrenztes Abbremsen des Fahrzeuges spüren, und unmittelbar nach dem Konditionierungs-Bremsimpuls eine Bremsphase eingeleitet wird. Unter unmittelbar danach wird dabei verstanden, dass sich die Bremsphase unverzüglich an den Kon ditionierungs-Bremsimpuls anschließt bzw. der Konditionierungs-Bremsimpuls unmittelbar in die Bremsphase übergeht, vorzugsweise derartig, dass sich die Ist-Eigenverzögerung zwischen dem Konditionierungs-Bremsimpuls und der Bremsphase nicht abrupt bzw. sprunghaft verändert. Unter der Ist-Eigenverzögerung wird dabei die Verzögerung des Fahrzeuges in Längsrichtung bzw. in Fahrtrichtung verstanden.

Dies kann beispielsweise dadurch erfolgen, dass die Bremsphase unmittelbar aus der abfallenden Flanke des Konditionierungs-Bremsimpulses eingeleitet wird, so dass der Konditionierungs-Bremsimpuls bei einer Ist-Eigenverzögerung von z.B. zwischen 0,1 m/s² und 2m/s², vorzugsweise bei zwischen 0,5m/s² und 1,5m/s², insbesondere bei 1m/s², in die Bremsphase unmittelbar übergeht.

Das Fahrzeug wird in der anschließenden Bremsphase in mindestens zwei Teilbrems-Bereichen durch eine sich zeitlich verändernde Ist-Eigenverzögerung über ein beliebiges Bremssystem abgebremst. Als Bremssystem kann dabei jedes System im Fahrzeug verwendet werden, das in der Lage ist, das Fahrzeug kontrolliert in Abhängigkeit einer Anforderung zu verzögern. Dazu kann das Bremssystem als Bremsmittel beispielsweise eine Motorbremse, eine Rekuperationsbremse (Nutzbremse), einen Retarder, Reibungsbremsen, etc. aufweisen. Unter Abbremsen wird demnach im Rahmen der Erfindung allgemein das Verzögern des Fahrzeuges unter Verwendung des jeweiligen Bremssystems bzw. des jeweiligen Bremsmittels verstanden, um den Konditionierungs-Bremsimpuls zu bewirken bzw. die Bremsphase umzusetzen.

Ein Teilbrems-Bereich ist dabei über ein Teilbrems-Intervall ausgedehnt und dadurch charakterisiert, dass innerhalb dieses Teilbrems-Intervalls ein gleichbleibender Ist-Ruck (jerk) bzw. eine konstante Veränderung der Ist-Eigenverzögerung vorliegt. Dabei sind zwei abgrenzbare Teilbrems-Bereiche innerhalb der Bremsphase, die hintereinander liegen und einen identischen Ist-Ruck aufweisen, als gleichwertig zu einem einzelnen Teilbrems-Bereich anzusehen. Verändert sich der Ist-Ruck hingegen, so beginnt ein benachbarter Teilbrems-Bereich mit einem entsprechend anderen konstanten Ist-Ruck usw.

Erfindungsgemäß ist dabei vorgesehen, dass die Ist-Eigenverzögerung in zumindest einem der Teilbrems-Bereiche derartig kontinuierlich über das jeweilige Teilbrems-Intervall verändert wird, dass sich in jedem Teilbrems-Bereich ein anderer Ist-Ruck bzw. eine andere konstante Änderung der Ist-Eigenverzögerung einstellt. Demnach existieren in der Bremsphase, in der das Fahrzeug abgebremst wird, keine Teilbrems-Bereiche mit demselben Ist-Ruck. Als weitere Bedingung ist erfindungsgemäß vorgesehen, dass sich der Ist-Ruck über zumindest einige Teilbrems-Bereiche der Bremsphase, vorzugsweise über alle Teilbrems-Bereiche der Bremsphase, degressiv verhält, d.h. zwischen benachbarten Teilbrems-Bereichen mit fortlaufender Zeit abnimmt.

Weiterhin ist vorgesehen, dass die Teilbrems-Bereiche mit dem jeweils unterschiedlichen Ist-Ruck ineinander übergehen, ohne dass sich die Ist-Eigenverzögerung abrupt bzw. sprunghaft verändert, so dass die Ist-Eigenverzögerung zumindest in der Bremsphase einen zeitlich stetigen Verlauf aufweist.

Durch das erfindungsgemäße Abbremsen mit dem Konditionierungs-Bremsimpuls sowie der unmittelbar nachfolgenden Bremsphase wird bereits der Vorteil erreicht, dass die Fahrgäste möglichst nicht umfallen bzw. noch eine Chance haben, sich festzuhalten. Oftmals sind stehende Fahrgäste in Fahrzeugen, insbesondere Bussen, nämlich abgelenkt bzw. halten sich nicht entsprechend an den vorhandenen Haltemöglichkeiten fest. Durch den Konditionierungs-Bremsimpuls können die Fahrgäste in einem ersten Schritt konditioniert werden, wobei diese ihre Muskulatur daraufhin anspannen und eventuell auch einen Ausfallschritt machen, um ihre Standsicherheit für die nachfolgende Bremsphase zu erhöhen, und sich ggf. auch stärker festhalten.

Der Konditionierungs-Bremsimpuls erzeugt bei den Fahrgästen zu Beginn der bevorstehenden Bremsung also eine Vorbereitungsreaktion, die in der nachfolgenden Bremsphase höhere Ist-Eigenverzögerungen als ohne diese zulässt, da die Fahrgäste darauf vorbereitet bzw. konditioniert sind. Die Sicherheit der Fahrgäste wird also dadurch erhöht und die nachfolgende Bremsung kann anders ausgelegt werden.

Zudem wird der Bremsvorgang für die Fahrgäste insgesamt kontrollierbarer und damit sicherer, da die Abbremsung in mehreren ineinander übergehenden Teilbrems-Bereichen ohne eine abrupte Veränderung der Ist-Eigenverzögerung stattfindet, so dass die anfängliche Unaufmerksamkeit weiter kompensiert werden kann und sich die Fahrgäste dadurch gezielt auf den Bremsvorgang einstellen können. Ein zu starkes Schwanken der Fahrgäste kann dadurch vermieden werden.

Die Voraussetzung dafür, dass keine abrupte Veränderung der Ist-Eigenverzögerung in der Bremsphase stattfindet, ist dabei derartig zu verstehen, dass der Ist-Ruck in der Bremsphase kleiner als z.B. 2m/s³, vorzugsweise kleiner als 1,7m/s³, insbesondere kleiner als 1,25m/s³ ist. Demnach sollen nach der bewussten Konditionierung der Fahrgäste über den Konditionierungs-Bremsimpuls jegliche ruckartige Verzögerungsänderungen vom Fahrzeug und damit für die Fahrgäste unvorhersehbare und unkontrollierbare Verhalten des Fahrzeuges vermieden werden.

Vorzugsweise kann dazu ergänzend vorgesehen sein, dass das Fahrzeug zumindest in der Bremsphase lediglich über die Reibungsbremsen des jeweiligen Bremssystems abgebremst wird, wobei dazu zwischen einem Antriebsstrang des Fahrzeuges und einem Abtriebsstrang des Fahrzeuges zumindest in der Bremsphase kein Drehmoment übertragen wird und/oder eine kraftschlüssige Verbindung unterbrochen ist, wobei dazu vorzugsweise ein Getriebe des Fahrzeuges ausgekuppelt oder in Neutralstellung gebracht wird.

Dadurch können bei einer Abbremsung über die Reibungsbremsen ruckartig auftretende Schleppmomente des Motors durch Schaltvorgänge bzw. eine Motorbremsung vermieden werden, die ebenso zu einer abrupten Abbremsung bzw. Veränderung der Ist-Eigenverzögerung des Fahrzeuges beitragen würden. Daher kann auch dadurch das einheitliche Ziel einer möglichst nicht-abrupten Veränderung der Ist-Eigenverzögerung erreicht werden.

Aber auch bei einer Verwendung anderer Bremsmittel, beispielsweise einer Rekuperationsbremse, kann vorteilhafterweise vorgesehen sein, dass eine Ansteuerung eines anderen Bremsmittels des Fahrzeuges unterdrückt wird, um keine unkontrollierbaren, abrupten Einflüsse auf die Ist-Eigenverzögerung zu erhalten.

Ergänzend werden vorteilhafterweise auch jegliche anderen externen Bremsanforderungen (XBR) unterdrückt, so dass das Fahrzeug in der Bremsphase auch nicht unkontrolliert über weitere Bremsmittel, z.B. einen Retarder, abrupt verzögert wird und damit eine ungewollte Veränderung der Ist-Verzögerung in der Bremsphase vermieden wird.

Ein degressives Verhalten hat weiterhin den Vorteil, dass sich die Fahrgäste bereits zu Beginn sehr stark festhalten müssen und vor einer Notsituation bzw. einer Bremssituation zusätzlich gewarnt sind. Da sich die Bremsung nachfolgend degressiv erhöht, können mögliche instabile Zustände der Fahrgäste besser abgefangen werden, da die Verzögerung nicht noch schneller ansteigt. Dadurch wird der Bremsvorgang für die Fahrgäste insgesamt kontrollierbarer und damit sicherer.

Vorzugsweise kann dazu vorgesehen sein, dass die Ist-Eigenverzögerung in zumindest einigen Teilbrems-Bereichen der Bremsphase derartig eingestellt wird, dass der Ist-Ruck eines nachfolgenden Teilbrems-Bereiches einem Anteil des Ist-Ruck des unmittelbar vorausgehenden Teilbrems-Bereiches entspricht, wobei der Anteil zwischen 0,4 (40%) und 0,6 (60%) liegt, vorzugsweise 0,5 (50%) ist. Dadurch kann bei Vorgabe eines Ist-Rucks für den ersten Teilbrems-Bereich der Bremsphase eine einfache Ermittlung des jeweiligen Ist-Rucks des jeweils nachfolgenden Teilbrems-Bereiches erfolgen, um das degressive Verhalten zu erreichen, indem diese beispielsweise sukzessive halbiert werden.

Vorzugsweise ist weiterhin vorgesehen, dass das Teilbrems-Intervall der jeweiligen Teilbrems-Bereiche und/oder die Veränderung der Ist-Eigenverzögerung zwischen benachbarten Teilbrems-Bereichen verändert wird, um ein degressives Verhalten des Ist-Rucks zu erreichen. Zur degressiven Veränderung des Ist-Rucks in den jeweiligen Teilbrems-Bereichen kann also in flexibler Weise sowohl die zeitliche Ausdehnung eines Teilbrems-Bereiches als auch die konstante Veränderung der Ist-Verzögerung innerhalb eines Teilbrems-Bereiches angepasst werden.

Vorzugsweise ist weiterhin vorgesehen, dass das Fahrzeug durch das Bewirken des Konditionierungs-Bremsimpulses derartig abgebremst bzw. verzögert wird, dass die Ist-Eigenverzögerung des Fahrzeuges zumindest kurzzeitig eine Grenz-Ist-Eigenverzögerung erreicht, wobei die Grenz-Ist-Verzögerung vorzugsweise zwischen 1m/s² und 3m/s², insbesondere zwischen 1,7m/s² und 2,7m/s², liegt und wobei die Grenz-Ist-Verzögerung vorzugsweise fahrzeugspezifisch gewählt wird. Dadurch kann durch den Konditionierungs-Bremsimpuls dasselbe Feeling, das maßgeblich durch die Ist-Eigenverzögerung bestimmt ist, auf die Fahrgäste erzeugt werden.

Dabei ist insbesondere vorgesehen, dass zum Bewirken des Konditionierungs-Bremsimpulses als Soll-Eigenverzögerung des Fahrzeuges eine fahrzeugspezifische Konditionierungs-Verzögerung vorgegeben wird, wobei das Bremsmittel des jeweiligen Bremssystems des Fahrzeuges über einen Konditionierungszeitraum mit der fahrzeugspezifisch vorgegebenen Konditionierungs-Verzögerung impulsartig angesteuert wird, wobei die Konditionierungs-Verzögerung beispielsweise zwischen 1m/s² und 3,5m/s², insbesondere zwischen 2,2m/s² und 3,2 m/s² beträgt, bzw. aus einer entsprechenden Lookup-Tabelle für ein bestimmtes Fahrzeug mit einem bestimmten Bremssystem bzw. mit entsprechenden Bremsmittel entnommen werden kann.

Eine fahrzeugspezifische Vorgabe hat dabei den Vorteil, dass jedes Fahrzeug anders auf eine Bremsanforderung reagiert, da das jeweilige Bremssystem anders ausgelegt ist. Um einen Ruck mit in etwa demselben Feeling zu erzeugen, muss daher eine fahrzeugspezifisch gewählte Konditionierungs-Verzögerung über das Bremssystem mit dem jeweiligen Bremsmittel umgesetzt werden, um die o.g. Grenz-Ist-Eigenverzögerung in jedem Fall zu erreichen. Dies berücksichtigt auch unterschiedliche Totzeiten des jeweiligen Bremssystems bzw. Bremsmittels, so dass identische Konditionierungs-Verzögerungen tatsächlich immer zu in etwa demselben Feeling auf die Fahrgäste führt und sich diese intuitiv auf einen Bremsvorgang einstellen können.

Vorzugsweise ist außerdem vorgesehen, dass der Konditionierungszeitraum abhängig von einer Ist-Eigengeschwindigkeit des Fahrzeuges ist und vorzugsweise zwischen 80ms und 250ms, insbesondere zwischen 120ms bei unter 40km/h und 170ms bei 80km/h, liegt. Dadurch wird berücksichtigt, dass bei höheren Ist-Eigengeschwindigkeiten des Fahrzeuges die abzubauende kinetische Energie höher wäre, um einen identischen Ruck zu erhalten als bei geringeren Ist-Eigengeschwindigkeiten des Fahrzeuges. Dies ist vorteilhaft, um ein nahezu gleiches Feeling der Fahrgäste auf eine Konditionierungs-Verzögerung zu erreichen.

Vorzugsweise ist weiterhin vorgesehen, dass in der Bremsphase zumindest für einige Teilbrems-Bereiche infinitesimale Teilbrems-Intervalle gewählt werden, so dass der Ist-Ruck über die zumindest einigen Teilbrems-Bereiche stetig differenzierbar bzw. quasi-kontinuierlich verläuft. Dadurch wird die Bremsung mit so wenig wie möglich spürbaren abrupten Veränderungen in der Ist-Eigenverzögerung durchgeführt, was die Kontrollierbarkeit der Situation und die Sicherheit der Fahrgäste positiv beeinflusst.

Vorzugsweise ist weiterhin vorgesehen, dass der Konditionierungs-Bremsimpuls und/oder die Bremsphase bei Erfüllen eines Abbruchkriteriums in einem Abbruch-Teilbrems-Bereich durch eine Reduzierung der Ist-Eigenverzögerung mit einem vorzugsweise konstanten Abbruch-Ruck von beispielsweise -1,5m/s³, kontrolliert abgebrochen wird, ohne dass sich die Ist-Eigenverzögerung abrupt verändert. Dadurch kann z.B. der Fahrer die automatisiert eingeleitete Abbremsung bei Vorliegen des Auslösekriteriums gezielt abbrechen, wenn beispielsweise eine Fehlauslösung vorliegt und der Fahrer dies erkannt hat. Das Abbruchkriterium kann aber auch dann erfüllt sein, wenn sich die Fahrsituation während der Bremsphase entschärft und automatisiert erkannt wird, dass das Auslösekriterium während einer Bremsung nicht mehr erfüllt wird. Um bei einem solchen Abbruch auch weiterhin die Kontrollierbarkeit der Fahrsituation durch die Fahrgäste sicherzustellen, erfolgt auch bei einem solchen Abbruch keine abrupte Veränderung der Ist-Eigenverzögerung, bis zur Beendigung der Bremsphase.

Vorzugsweise ist weiterhin vorgesehen, dass die Ist-Eigenverzögerung in der Bremsphase derartig eingestellt wird, dass sich die Ist-Eigenverzögerung auf eine Maximal-Verzögerung erhöht. Damit kann vorteilhafterweise eine fahrzeugspezifische Maximal-Verzögerung für den Bremsvorgang festgelegt werden, die für die Fahrgäste im Fahrzeug zielbringend im Hinblick auf ihre Sicherheit und ihre Kontrollierbarkeit ist. Mit dem erfindungsgemäßen Verfahren kann beispielsweise eine Maximal-Verzögerung von ca. 3,5m/s² erreicht werden und gleichzeitig eine hohe Kontrollierbarkeit der Bremssituation durch die Fahrgäste und damit eine hohe Sicherheit der Fahrgäste gewährleistet werden.

Ergänzend kann vorgesehen sein, dass die Maximal-Verzögerung gewählt wird in Abhängigkeit
- einer Ist-Eigenquerbeschleunigung des Fahrzeuges, die bei Einleiten der Bremsphase im Fahrzeug vorliegt, und/oder
- einer Ist-Eigenquerbeschleunigungsänderung des Fahrzeuges, die bei Einleiten der Bremsphase im Fahrzeug vorliegt, und/oder- einer prädizierten Eigenquerbeschleunigung des Fahrzeuges, die vorzugsweise in Abhängigkeit einer Lenkwinkel-Geschwindigkeit und/oder in Abhängigkeit von Positionsdaten, vorteilhafterweise in Kombination mit Kartendaten und/oder in Abhängigkeit von sensorisch erfassten Umgebungsdaten bzgl. des Fahrbahnverlaus, vorausschauend abgeschätzt wird, und/oder
- einer prädizierten Eigenquerbeschleunigungsänderung des Fahrzeuges, die vorzugsweise in Abhängigkeit einer Lenkwinkel-Geschwindigkeit und/oder in Abhängigkeit von Positionsdaten, vorteilhafterweise in Kombination mit Kartendaten und/oder in Abhängigkeit von sensorisch erfassten Umgebungsdaten bzgl. des Fahrbahnverlaus, vorausschauend abgeschätzt wird, und/oder
- einer Anzahl an Teilbrems-Bereichen, und/oder
- des jeweiligen Ist-Rucks in den mindestens zwei Teilbrems-Bereichen.

Damit kann die Maximal-Beschleunigung gezielt auf die Parametrierung des Verfahrens bzw. die aktuelle Fahrdynamik abgestimmt werden. Dadurch kann beispielsweise berücksichtigt werden, dass bei Kurvenfahren die Fahrzeugverzögerung zusätzlich zur Querbeschleunigung auf den stehenden Fahrgast einwirkt. Dieser ist in Kurvenfahrten darauf bedacht, sein Gleichgewicht zu halten und kann aus diesem Grund nur noch eine betragsmäßig kleinere Verzögerung ausregeln. Vorzugsweise kann dabei vorgesehen sein, dass auch der Ist-Ruck im jeweiligen Teilbrems-Bereich in Abhängigkeit einer Ist-Eigenquerbeschleunigung und/oder der Ist-Eigenquerbeschleunigungsänderung des Fahrzeuges gewählt werden, die bei Einleiten der Bremsphase im Fahrzeug vorliegt. Auch dadurch kann eine bessere Kontrollierbarkeit erreicht werden.

Weiterhin kann bei einem Verlauf der Bremsung mit einer hohen Anzahl an Teilbrems-Bereichen eine höhere Maximal-Verzögerung aufgebaut werden, da die Kontrollierbarkeit des Bremseingriffs durch den stehenden Fahrgast maßgeblich durch den Ist-Ruck in Abhängigkeit der aktuellen Ist-Eigenverzögerung definiert wird. Dadurch kann der Ist-Ruck in Abhängigkeit der aktuellen Ist-Eigenverzögerung fortlaufend degressiv angepasst werden. Zudem wirkt sich auch die Veränderung der Ist-Eigenverzögerung (Ist-Ruck) auf die Kontrollierbarkeit durch die Fahrgäste aus, so dass bei gleichbleibender Kontrollierbarkeit eine größere Maximal-Verzögerung möglich ist.

Alternativ oder ergänzend können die Maximal-Verzögerung und/oder der Ist-Ruck in den jeweiligen Teilbrems-Bereichen aber auch in Abhängigkeit eines Sicherheitszeitraumes und/oder einer Sicherheitsdistanz gewählt werden, wobei sich der Sicherheitszeitraum aus einer Differenz aus einem prädizierten Bremsphasen-Endzeitpunkt und einem prädizierten Ereignis-Zeitpunkt und die Sicherheitsdistanz aus einer prädizierten Bremsphasen-Endposition und einer prädizierten Ereignis-Position ergibt. Der prädizierte Bremsphasen-Endzeitpunkt ist dabei definiert als Zeitpunkt, an dem die Bremsphase beendet ist, z.B. wenn sich das Fahrzeug im Stillstand befindet (Stillstand-Zeitpunkt) oder nachdem die Bremsphase bei Erfüllen des Abbruchkriteriums kontrolliert abgebrochen ist (Abbruch-Zeitpunkt). Die prädizierte Bremsphasen-Endposition ist die Position, an der sich das Fahrzeug zu dem Bremsphasen-Endzeitpunkt befindet.

Der prädizierte Ereignis-Zeitpunkt und die prädizierte Ereignis-Position sind abhängig vom jeweiligen Auslösekriterium. Vorzugsweise ist vorgesehen, dass das Auslösekriterium erfüllt ist, wenn
- eine ermittelte Kollisionswahrscheinlichkeit des Fahrzeuges mit einem Objekt über einem vorgegebenen Grenzwert liegt, oder
- ein vorgegebenes Auslösesignal vorliegt, das beispielsweise auf eine rote Ampel oder einen nicht fahrtüchtigen Fahrer oder einen schwerwiegenden Fahrzeugfehler hinweist. Damit sind eine Reihe von Bremssituationen möglich, in denen das Verfahren Anwendung finden kann. Das Verfahren ist damit nicht auf kollisionsvermeidende Bremssituationen beschränkt.

Der prädizierte Ereignis-Zeitpunkt ist ausgehend davon der Zeitpunkt, zu dem das Fahrzeug aufgrund des auslösenden Ereignisses eine prädizierte Ereignis-Position erreichen wird, wenn die Bremsphase wie geplant durchgeführt wird. Die prädizierte Ereignis-Position kann beispielsweise die Position sein, an der das Fahrzeug mit dem Objekt kollidieren würde oder an der das Fahrzeug vor einer roten Ampel spätestens stoppen sollte. Die jeweiligen prädizierten Zeitpunkte bzw. Positionen können dabei aus prädizierten Trajektorien oder aus einer analytischen Betrachtung der Fahrdynamik des Fahrzeuges bzw. des jeweiligen Objektes hergeleitet werden.

Wird während der Bremsphase vorausschauend festgestellt, dass der Sicherheitszeitraum und/oder die Sicherheitsdistanz über einem jeweils zugeordneten Grenzwert liegen, so können die Maximal-Verzögerung und/oder der degressive Verlauf des Ist-Rucks über die jeweiligen Teilbrems-Bereiche entsprechend angepasst, insbesondere verringert werden. Dies vermeidet, dass durch eine für die Situation zu hoch angesetzte Maximal-Verzögerung bzw. Ist-Ruck ein unnötig hohes Verletzungsrisiko für die Fahrgäste eingegangen wird. Die Bremsung wird, angepasst an die aktuelle Fahrsituation, also kontrollierbarer.

Vorzugsweise ist weiterhin vorgesehen, dass die Ist-Eigenverzögerung des Fahrzeuges in der Bremsphase ab einem Ausramp-Zeitpunkt mit einem konstanten Ausramp-Ruck von beispielsweise -1,5m/s³ reduziert wird. Dadurch kann ein kontrollierbares Anhalten ("Softstop") gewährleistet werden, wobei der Ausramp-Zeitpunkt vorzugsweise derartig gewählt wird, dass das Fahrzeug bei einer Reduzierung der Ist-Eigenverzögerung mit dem konstanten Ausramp-Ruck zu einem Stillstand-Zeitpunkt unmittelbar vor dem Stillstand des Fahrzeuges eine vorgegebene End-Ist-Eigenverzögerung von beispielsweise 1m/s² erreicht. Demnach wird in der Bremsphase ständig geprüft, in welchem Teilbrems-Bereich dieser Ausramp-Zeitpunkt liegt, und die Bremsung derartig "ausgerampt" um kontrolliert anzuhalten.

Vorzugsweise ist der Ausramp-Zeitpunkt dabei abhängig von der Ist-Eigengeschwindigkeit und/oder der Ist-Eigenverzögerung.

Vorzugsweise ist weiterhin vorgesehen, dass nach Erfüllen des Auslösekriteriums akustische und/oder optische und/oder haptische Fahrgast-Signale zum Warnen der Fahrgäste und/oder Objekt-Signale zum Warnen von Objekten in der Umgebung ausgegeben werden. Dadurch können die Fahrgäste ergänzend zu dem Konditionierungs-Bremsimpuls vor einer Bremsphase gewarnt werden.

Vorzugsweise ist vorgesehen, dass das Fahrzeug ein Straßenfahrzeug ist, beispielsweise ein (Linien-)Bus, das geeignet ist, stehende und/oder nicht-angeschnallte Fahrgäste zu transportieren. Vorzugsweise weist das Fahrzeug dabei ein (elektro-)pneumatisches Bremssystem auf. Es sind aber grundsätzlich auch andere fluidbetätigte und rein elektrisch aktuierte Bremssysteme möglich, die entsprechend abzustimmen sind.

Die Erfindung wird im Folgenden anhand eines Ausführungsbeispiels näher erläutert. Es zeigen:
- Fig. 1: eine schematische Ansicht eines Fahrzeuges mit mehreren Fahrgästen;
- Fig. 2: ein Flussdiagramm des erfindungsgemäßen Verfahrens; und
- Fig. 3a, 3b: zeitliche Verläufe von Bremsungen, die gemäß dem erfindungsgemäßen Verfahren durchgeführt werden.

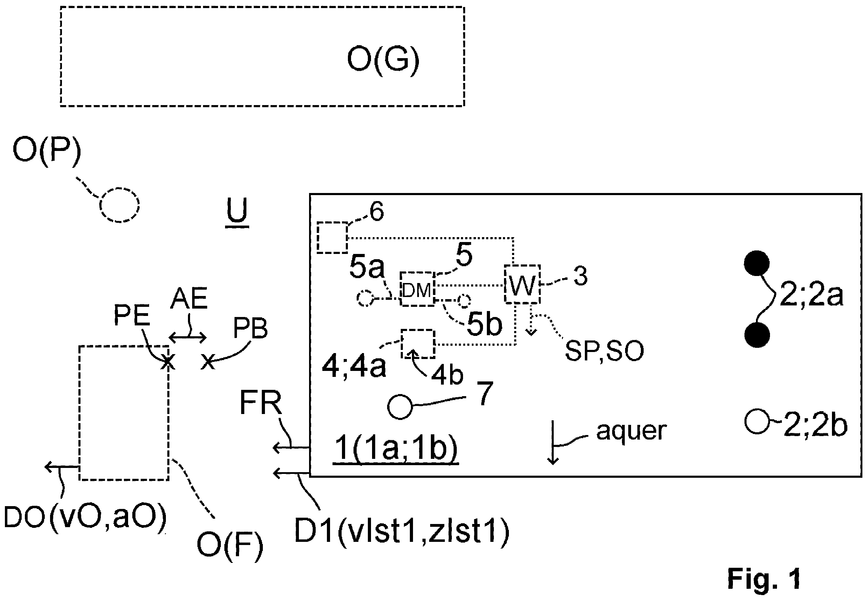

In Figur 1 ist schematisch ein Fahrzeug 1 dargestellt, das dem Transport bzw. der Beförderung von Fahrgästen 2 dient, wobei die Fahrgäste 2 stehende Fahrgäste 2a und/oder nicht-angeschnallte Fahrgäste 2b sind. Das Fahrzeug 1 kann dabei ein Straßenfahrzeug 1a, beispielsweise ein Bus 1b, sein.

Das Fahrzeug 1 weist eine Steuereinheit 3 auf, die ausgebildet ist, ein Bremssystem 4 und/oder ein Getriebe 5 des Fahrzeuges 1 anzusteuern. Als Bremssystem 4 kann dabei jedes System im Fahrzeug 1 verwendet werden, das in der Lage ist, das Fahrzeug 1 kontrolliert abzubremsen bzw. zu verzögern. Das Bremssystem 1 kann dazu als Bremsmittel beispielsweise Reibungsbremsen 4b, insbesondere als Bestandteil eines (elektropneumatischen Bremssystems 4a, eine Motorbremse, eine Rekuperationsbremse (Nutzbremse), einen Retarder, etc. aufweisen. Weiterhin ist eine Umgebungssensorik 6 vorgesehen, mit der eine Umgebung U um das Fahrzeug 1 überwacht werden kann. In der Umgebung U können sich Objekte O, beispielsweise Personen P, andere Verkehrsmittel F, Gebäude G, etc. befinden. All diese Objekte O stellen mögliche Kollisionsobjekte dar, mit denen das Fahrzeug 1 kollidieren kann. Um dies zu bewerten, kann die Steuereinheit 3 anhand einer Eigenfahrdynamik D1 des Fahrzeuges 1, z.B. einer Ist-Eigengeschwindigkeit vlst1 oder einer Ist-Eigenverzögerung zlst1, etc., und einer Objektdynamik DO, d.h. einer Objektgeschwindigkeit vO oder einer Objektbeschleunigung aO, etc. eine Kollisionswahrscheinlichkeit W ermitteln und daraufhin ein Warnsignal SW erzeugen.

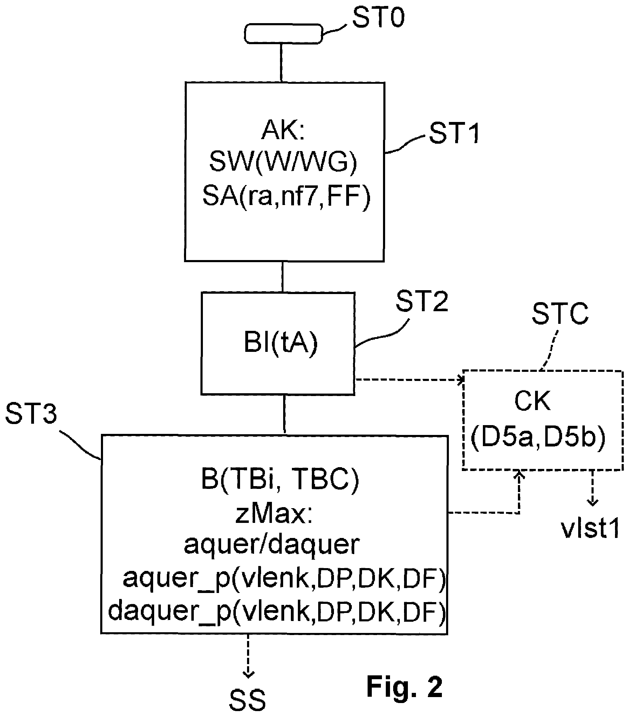

Die Steuereinheit 3 ist ferner in der Lage, bei Erfüllen eines Auslösekriteriums AK das Bremssystem 4 und/oder das Antriebssystem 5 in einem in Fig. 2 dargestellten Verfahren anzusteuern. Nach einem Initialisierungsschritt ST0 wird dabei in einem ersten Schritt ST1 geprüft, ob das Auslösekriterium AK erfüllt ist.

Das Auslösekriterium AK kann beispielsweise dann erfüllt sein, wenn ein Warnsignal SW vorliegt, das bei Überschreiten eines Grenzwertes WG für die Kollisionswahrscheinlichkeit W von der Steuereinheit 3 automatisch erzeugt wird und dabei auf eine mögliche Kollision in der Zukunft hinweist. Zudem kann das Auslösekriterium AK auch durch ein anderweitig automatisiert vorgegebenes Auslösesignal SA erfüllt werden. Das Auslösesignal SA kann beispielsweise bei Erkennen einer roten Ampel rA oder bei Erkennen eines nicht fahrtüchtigen Fahrers nf7 oder bei Erkennen eines schwerwiegenden Fahrzeugfehlers FF erzeugt bzw. getriggert werden.

Grundsätzlich kann das Auslösekriterium AK auch erfüllt sein, wenn ein Fahrer 7 des Fahrzeuges 1 manuell eine hohe Soll-Eigenverzögerung zSoll1 anfordert, beispielsweise aufgrund einer manuell eingeleiteten Bremsung zur Kollisionsvermeidung, und vorzugsweise zeitgleich kein Warnsignal SW vorliegt. Dies stellt jedoch lediglich eine optionale Ausführung dar, da dem Fahrer 7 normalerweise die volle Kontrolle über den Ablauf der Bremsung gegeben werden sollte.

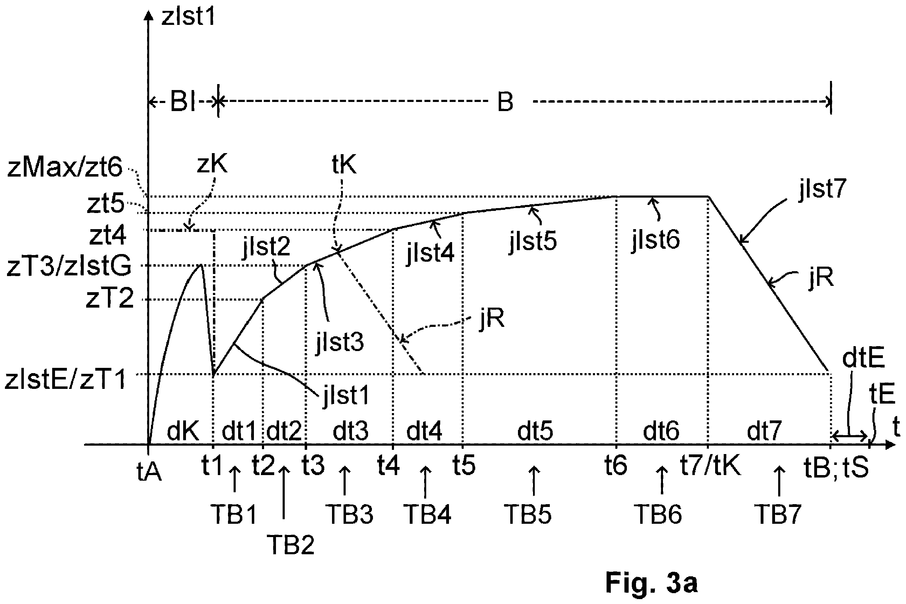

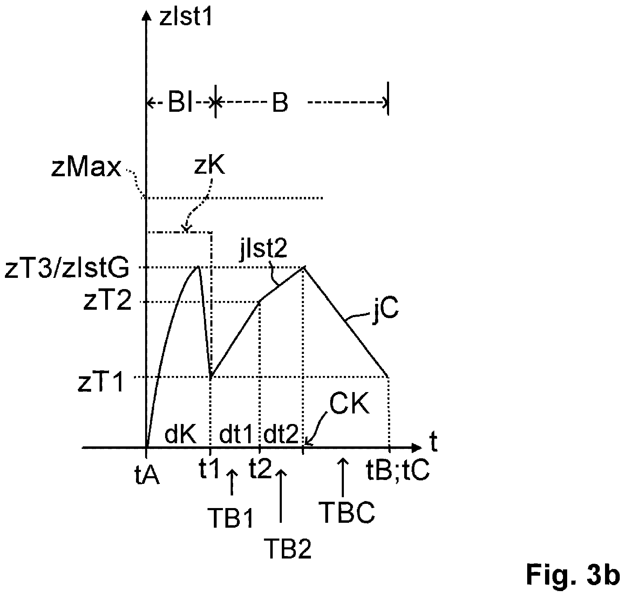

Bei Erfüllen des Auslösekriteriums AK wird in einem nachfolgenden zweiten Schritt ST2 von der Steuereinheit 3 zu einem Auslöse-Zeitpunkt tA (s. Fig. 3) ein Konditionierungs-Bremsimpuls BI über das Bremssystem 4 des Fahrzeuges 1, z.B. über die Reibungsbremsen 4b, bewirkt, um dieses kurzzeitig bzw. impulsartig abzubremsen. Dadurch sollen die Fahrgäste 2 des Fahrzeuges 1 konditioniert bzw. auf die folgende Abbremsung des Fahrzeuges 1 eingestellt werden. Der Konditionierungs-Bremsimpuls BI dient damit hauptsächlich der Konditionierung der Fahrgäste 2, die ihre Muskulatur daraufhin anspannen und eventuell auch einen Ausfallschritt machen, um ihre Standsicherheit zu erhöhen.

Dazu ist der Konditionierungs-Bremsimpuls BI derartig zeitlich und von der Intensität her abzustimmen, dass die Fahrgäste 2 diesen auch wahrnehmen können, der aber gleichzeitig ungefährlich für die Fahrgäste 2 ist, d.h. dass diese unter normalen Bedingungen dadurch nicht stürzen. Dies kann erreicht werden, indem die Ist-Eigenverzögerung zlst1 des Fahrzeuges 1 innerhalb eines Konditionierungszeitraums dK eine vorgegebene Grenz-Ist-Eigenverzögerung zlstG von mindestens 1,7 m/s² zumindest kurzzeitig erreicht oder überschreitet (s. Fig. 3a). Dies ist normalerweise ausreichend, um bei den Fahrgästen 2 eine bestimmte Wahrnehmung zu erreichen und diese damit auf die Bremssituation einzustellen.

Da jedes Fahrzeug 1 je nach Ausstattung eine andere Wirkung bei den Fahrgästen 2 auslöst, ist die Grenz-Ist-Eigenverzögerung zlstG fahrzeugspezifisch zu wählen. Um jedoch ein Stürzen der Fahrgäste 2 zu vermeiden, ist die Grenz-Ist-Eigenverzögerung zlstG während des Konditionierungs-Bremsimpulses BI auch nicht zu hoch zu wählen, beispielsweise zwischen 1m/s² und ca. 3m/s².

Ein derartiger Konditionierungs-Bremsimpuls BI zum zumindest kurzzeitigen Bewirken der Grenz-Ist-Eigenverzögerung zlstG wird hier durch eine impulsartige Anforderung einer festgelegten Konditionierungsverzögerung zK als Soll-Eigenverzögerung zSoll1 des Fahrzeuges 1 innerhalb des Konditionierungszeitraums dK erzeugt (s. Fig. 3a). Aufgrund unterschiedlicher Auslegungen von Bremssystemen 4 und unterschiedlicher Reaktionen eines Fahrzeuges 1 auf eine bestimmte angeforderte Soll-Eigenverzögerung zSoll1 ist die Konditionierungsverzögerung zK fahrzeugspezifisch zu wählen. Beispielsweise kann eine Ansteuerung der Bremsen eines elektropneumatischen Bremssystems 4a in einem Bus 1b mit einer Konditionierungsverzögerung zK von 3m/s² über einen Konditionierungszeitraum dK von zwischen 120ms und 170ms vorgesehen sein, um eine Grenz-Ist-Eigenverzögerung zlstG von beispielsweise 2,5m/s² zumindest kurzzeitig zu erreichen und die Fahrgäste 2 dadurch zu konditionieren.

Der Konditionierungszeitraum dK kann vorteilhafterweise in Abhängigkeit der Ist-Eigengeschwindigkeit vlst1 des Fahrzeuges 1 gewählt werden. Dies resultiert daraus, dass die Anforderung einer bestimmten Soll-Eigenverzögerung zSoll1 bzw. der Konditionierungsverzögerung zK je nach Ist-Eigengeschwindigkeit vlst1 des Fahrzeuges 1 eine andere Wirkung im Fahrzeug 1 bei den Fahrgästen 2 hervorruft. Dies ist dadurch bedingt, dass bei höheren Ist-Eigengeschwindigkeiten vlst1 des Fahrzeuges 1 die abzubauende kinetische Energie höher wäre, um einen identischen Ruck infolge des Konditionierungs-Bremsimpulses BI zu erhalten als bei geringeren Ist-Eigengeschwindigkeiten vlst1 des Fahrzeuges 1. Die Grenz-Ist-Eigenverzögerung zlstG wird daher bei Vorgabe einer festgelegten Konditionierungsverzögerung zK bei einem schnelleren Fahrzeug 1 erst später erreicht, so dass der Konditionierungszeitraum dK entsprechend größer zu wählen ist, um eine für die Fahrgäste 2 deutlich spürbare Abbremsung des Fahrzeuges 2 zu erzeugen, als bei einem langsameren Fahrzeug 1. Dies ist vorteilhaft, um ein nahezu gleiches Feeling der Fahrgäste 2 auf eine Konditionierungs-Verzögerung zK zu erreichen.

Beispielsweise kann bei einer Ist-Eigengeschwindigkeit vlst1 von unter 40km/h ein Konditionierungszeitraum dK von 120ms und bei 80km/h ein Konditionierungszeitraum dK von 170ms gewählt werden. Bei anderen fluidbetätigten Bremssystemen mit anderem Verzögerungsverhalten ist der Konditionierungszeitraum dK und auch die Konditionierungsverzögerung zK entsprechend anzupassen.

Nach dem Erzeugen des Konditionierungs-Bremsimpulses BI zum Auslöse-Zeitpunkt tA wird in einem dritten Schritt ST3 eine Bremsphase B eingeleitet. In dieser wird das Fahrzeug 1 vorzugsweise bis in den Stillstand SS abgebremst, insofern die Bremsphase B bei Vorliegen eines Abbruchkriteriums CK nicht vorzeitig in kontrollierter Weise abgebrochen wird.

Die Abbremsung des Fahrzeuges 1 in der Bremsphase B erfolgt normalerweise in unterschiedlichen Teilbrems-Bereichen TBi, mit i =1, 2, 3, ... N, wobei die Anzahl N der Teilbrems-Bereiche TBi vorgebbar ist und mindestens zwei beträgt. Die unterschiedlichen Teilbrems-Bereiche TBi unterscheiden sich hierbei durch den zeitlichen Verlauf der sich einstellenden Ist-Eigenverzögerung zlst1, wobei die Ist-Eigenverzögerung zlst1 von unterschiedlichen Faktoren abhängig ist. Dies wird anhand von zwei Beispielen in Fig. 3a und Fig. 3b im Folgenden näher dargestellt:

In Fig. 3a wird in einem ersten Teilbrems-Bereich TB1 zu einem ersten Teilbrems-Zeitpunkt t1 beispielhaft eine erste Teilbrems-Verzögerung zT1 von z.B. 1m/s² als Ist-Eigenverzögerung zlst1 des Fahrzeuges 1 eingestellt. Der erste Teilbrems-Zeitpunkt t1 ist dabei derartig gewählt, dass die erste Teilbrems-Verzögerung zT1 auf der abfallenden Flanke des Konditionierungs-Bremsimpulses BI liegt. Der Konditionierungs-Bremsimpuls BI geht also ohne einen abrupten bzw. sprunghaften Anstieg der Ist-Eigenverzögerung zlst1 unmittelbar in den ersten Teilbrems-Bereich TB1 über.

Die Ist-Eigenverzögerung zlst1 wird ausgehend davon innerhalb des ersten Teilbrems-Bereiches TB1 bis zu einem zweiten Teilbrems-Zeitpunkt t2 auf eine zweite Teilbrems-Verzögerung zT2 von 2m/s² kontinuierlich erhöht. Dies erfolgt innerhalb eines ersten Teilbrems-Intervalls dt1 von ca. 800ms. Dadurch ergibt sich für den ersten Teilbrems-Bereich TB1 ein bestimmter erster Ist-Ruck jlst1 (Gradient der Ist-Eigenverzögerung zlst1 im ersten Teilbrems-Bereich TB1).

In einem sich daran anschließenden zweiten Teilbrems-Bereich TB2 wird ein geringerer zweiter Ist-Ruck jlst2 dadurch eingestellt, dass die Ist-Eigenverzögerung zlst1 ausgehend vom zweiten Teilbrems-Zeitpunkt t2 bis zu einem dritten Teilbrems-Zeitpunkt t3 auf eine dritte Teilbrems-Verzögerung zT3 von ca. 2,5m/s² kontinuierlich erhöht wird. Ein zweites Teilbrems-Intervall dt2 (t2 bis t3) wird beispielsweise auf ebenfalls 800ms eingestellt, so dass der erste Ist-Ruck jlst1 = 1,25m/s³ für den ersten Teilbrems-Bereich TB1 größer ist als der zweite Ist-Ruck jlst2 = 0,625 m/s³ für den zweiten Teilbrems-Bereich TB2. Hierbei kann grundsätzlich festgelegt werden, dass der Ist-Ruck jlsti innerhalb der Bremsphase B einen Wert von 2m/s³, vorzugsweise 1,5m/s³, insbesondere 1,25m/s³ nicht überschreitet, um eine für die Fahrgäste 2 sichere und kontrollierbare Bremsung zu ermöglichen.

Anschließend folgen weitere Teilbrems-Bereiche TB3, TB4, TB5 mit dem jeweiligen Ist-Ruck jlst3, jlst4, jlst5, die aus Anstiegen auf eine vierte Teilbrems-Verzögerung zT4 von 3.0m/s² innerhalb eines dritten Teilbrems-Intervalls dt3 von 1600ms, auf eine fünfte Teilbrems-Verzögerung zT5 von 3.2m/s² innerhalb eines vierten Teilbrems-Intervalls dt4 von 900ms und auf eine sechste Teilbrems-Verzögerung zT6 von 3.5m/s² innerhalb eines fünften Teilbrems-Intervalls dt5 von 2200ms, folgen. Die sechste Teilbrems-Verzögerung zT6 entspricht gemäß diesem Ausführungsbeispiel einer Maximal-Verzögerung zMax des Fahrzeuges 1.

Damit ergibt sich während der Bremsphase B ein degressives Verhalten in Bezug auf den Ist-Ruck jlsti, wobei der erste Ist-Ruck jlst1 nach dem Konditionierungs-Bremsimpuls BI am höchsten ist. Die Fahrgäste 2 spüren also in dem ersten Teilbrems-Bereich TB1 die höchste Änderung in der Ist-Eigenverzögerung zlst1 des Fahrzeuges 1.

In einem nachfolgenden sechsten Teilbrems-Bereich TB6 wird die Ist-Eigenverzögerung zlst1 bis zu einem siebenten Teilbrems-Zeitpunkt t7 konstant auf der sechsten Teilbrems-Verzögerung zT6 bzw. hier der Maximal-Verzögerung zMax gehalten. Der sechste Ist-Ruck jlst6 ist demnach Null, so dass das degressive Verhalten auch im sechsten Teilbrems-Bereich TB6 weitergeführt wird. Der siebente Teilbrems-Zeitpunkt t7 wird in dieser Ausführungsform wie folgt festgelegt:

Während der gesamten Bremsphase B wird geprüft, ab welchem Ausramp-Zeitpunkt tR die Ist-Eigenverzögerung zlst1 des Fahrzeuges 1 zu reduzieren ist, um mit einem konstanten Ausramp-Ruck jR von beispielsweise - 1,5m/s³ zu einem Stillstand-Zeitpunkt tS im bzw. kurz vor dem Stillstand SS des Fahrzeuges 1 eine End-Ist-Eigenverzögerung zIstE von beispielsweise 1m/s² zu erreichen. Für den in Fig. 3a abgebildeten Fall, dass in dem sechsten Teilbrems-Bereich TB6 eine Maximal-Verzögerung zMax von 3,5m/s² erreicht ist, ist der Ausramp-Zeitpunkt tR zur Reduzierung der Ist-Eigenverzögerung zlst1 zum siebenten Teilbrems-Zeitpunkt t7 erfüllt, wenn die Fahrzeug-Ist-Geschwindigkeit vlst1 bei einer Grenz-Ist-Eigengeschwindigkeit des Fahrzeuges 1 von ca. 23 km/h liegt.

Da das Reduzieren der Ist-Eigenverzögerung zlst1 mit dem Ausramp-Ruck jR an die aktuell vorliegende Ist-Eigenverzögerung zlst1 und auch an die aktuell vorliegende Ist-Eigengeschwindigkeit vlst1 des Fahrzeuges 1 gekoppelt ist, kann der Ausramp-Zeitpunkt tR zum Reduzieren der Ist-Eigenverzögerung zlst1 auf die End-Ist-Eigenverzögerung zIstE grundsätzlich auch bereits vor dem Erreichen der Maximal-Verzögerung zMax in einem der vorherigen Teilbrems-Bereiche TBi liegen (strichpunktierte Linie in Fig. 3a im dritten Teilbrems-Bereich TB3). Entsprechend kann die Anzahl N an Teilbrems-Bereichen TBi bei Bremsvorgängen mit geringen Ist-Geschwindigkeiten vlst reduziert sein gegenüber Bremsvorgängen mit höheren Ist-Geschwindigkeiten vlst.

Über den Ausramp-Ruck jR kann ein für die Fahrgäste 2 kontrollierbares Anhalten ("Softstop") des Fahrzeuges 1 gewährleistet werden, da eine abrupte Veränderung der Ist-Eigenverzögerung zlst1 beim Erreichen des Stillstandes SS vermieden wird. Die Fahrgäste 2 können sich also darauf einstellen, so dass das Erreichen des Stillstandes SS ebenfalls kontrollierbar ist.

Ab dem siebenten Teilbrems-Zeitpunkt t7 wird die Ist-Eigenverzögerung zlst1 in einem siebenten Teilbrems-Bereich TB7 also kontinuierlich mit einem siebenten Ist-Ruck jlst7, der dem Ausramp-Ruck jR entspricht, zurückgenommen, d.h. der siebente Ist-Ruck jlst7 ist negativ.

Damit wird die Ist-Eigenverzögerung zlst1 hier in sieben Teilbrems-Bereichen TBi derartig eingestellt, dass sich die Fahrgäste 2 darauf einstellen und die jeweiligen Verzögerungsanforderungen auch kompensieren können, um das Sturzrisiko zu minimieren. Dazu wird eine kontinuierlich verlaufende Bremsung ohne Sprünge bzw. abrupte Veränderungen in der Ist-Eigenverzögerung zlst1 durchgeführt. Dadurch wird der Bremsvorgang für die Fahrgäste 2 insgesamt kontrollierbarer und damit sicherer, da die Bremsung weniger "abgehackt" ist.

Mit dieser Methode ist es grundsätzlich möglich, eine gegenüber dem Normalfall erhöhte Maximal-Verzögerung zMax zu wählen. Eine Bremsung bei einer Ist-Eigengeschwindigkeit vlst1 von 80 km/h, bei der in mehreren Teilbrems-Bereichen TBi auf eine Maximal-Verzögerung zMax von z.B. 3,2 m/s² gerampt wird, kann dann von einem Fahrgast 2 besser kontrolliert werden, als eine Bremsung mit einer Maximal-Verzögerung zMax von 2 m/s², die Sprünge in der Ist-Eigenverzögerung zlst1 aufweist, was sich negativ auf die Kontrollierbarkeit auswirkt.

Die Anzahl N der Teilbrems-Bereiche TBi kann hierbei beliebig erhöht und damit die Teilbrems-Intervalle dti und/oder die jeweiligen Teilbrems-Verzögerungen zTi entsprechend angepasst werden, um bei infinitesimal kleinen Teilbrems-Intervallen dti einen kontinuierlich abfallenden (degressiven) Verlauf des Ist-Rucks jlsti über die jeweiligen Teilbrems-Bereiche TBi mit einem Vorzeichenwechsel beim Ausramp-Ruck jR bis zum Erreichen des Stillstandes SS zu erreichen. Dadurch kann die Kontrollierbarkeit durch die Fahrgäste weiter erhöht werden.

Die Maximal-Verzögerung zMax und/oder der jeweilige Ist-Ruck jlsti können hierbei im jeweiligen Teilbrems-Bereich TBi ergänzend in Abhängigkeit einer Ist-Eigenquerbeschleunigung aquer und/oder einer Ist-Eigenquerbeschleunigungsänderung daquer des Fahrzeuges 1, die bei Einleiten der Bremsphase B im Fahrzeug 1 vorliegt, gewählt werden. Dies hat den Hintergrund, dass z.B. während einer Kurvenfahrt die Ist-Eigenverzögerung zlst1, die gemäß der Erfindung in Fahrtrichtung FR des Fahrzeuges 1 angegeben wird, zusätzlich zu der Ist-Eigenquerbeschleunigung aquer auf den z.B. stehenden Fahrgast 2 einwirkt. Dieser ist während einer Kurvenfahrt darauf bedacht, sein Gleichgewicht zu halten und kann aus diesem Grund nur noch eine betragsmäßig kleinere Ist-Eigenverzögerung zlst1 in Fahrtrichtung FR des Fahrzeuges 1 ausregeln.

Die Ist-Eigenquerbeschleunigung aquer bzw. die Ist-Eigenquerbeschleunigungsänderung daquer kann beispielsweise aus einem Lenkradwinkel, einem Übersetzungsverhältnis des Getriebes 5, einer Lenkkinematik, einem Radstand und der Ist-Eigengeschwindigkeit vlst1 für eine ebene Fahrt abgeschätzt aber auch über einen entsprechenden Querbeschleunigungssensor gemessen werden.

Ergänzend kann statt der Ist-Eigenquerbeschleunigung aquer eine prädizierte Eigenquerbeschleunigung aquer_p oder eine prädizierte Eigenquerbeschleunigungsänderung daquer_p z.B. basierend auf einer Lenkwinkelgeschwindigkeit vlenk oder anhand von Positionsdaten DP, beispielsweise aus Routendaten und/oder aus Kartendaten KD und/oder aus sensorisch erfassten Fahrbahnverlaufsdaten DF, ermittelt werden. Aus den Positionsdaten DP kann dabei eine GPS-basierte Bahnplanung und damit die zukünftige Eigenquerbeschleunigung abgeschätzt werden.

Ergänzend können die Maximal-Verzögerung zMax und/oder der jeweilige Ist-Ruck jlsti in den jeweiligen Teilbrems-Bereichen TBi auch in Abhängigkeit eines Sicherheitszeitraumes dtE (s. Fig. 3a) und/oder einer Sicherheitsdistanz AE (s. Fig. 1) gewählt werden. Der Sicherheitszeitraum dtE ergibt sich dabei aus einer Differenz aus einem prädizierten Bremsphasen-Endzeitpunkt tB (Abbruch-Zeitpunkt tC bzw. Stillstandzeitpunkt tS, s. Fig. 3a, 3b), d.h. der Zeitpunkt, an dem die Bremsphase B beendet ist, und einem prädizierten Ereignis-Zeitpunkt tE. Die Sicherheitsdistanz AE ergibt sich entsprechend aus einer prädizierten Bremsphasen-Endposition PB und einer prädizierten Ereignis-Position PE. Die prädizierte Bremsphasen-Endposition PB ist die Position, an der sich das Fahrzeug 1 zu dem Bremsphasen-Endzeitpunkt tB befindet.

Der prädizierte Ereignis-Zeitpunkt tE ist ausgehend vom Auslösekriterium AK der Zeitpunkt t, zu dem das Fahrzeug 1 aufgrund des auslösenden Ereignisses eine prädizierte Ereignis-Position PE erreichen wird, wenn die Bremsphase B wie vorausgeplant durchgeführt wird. Die prädizierte Ereignis-Position PE kann also beispielsweise die Position sein, an der das Fahrzeug 1 mit dem Objekt O kollidieren würde oder an der das Fahrzeug 1 vor einer roten Ampel rA spätestens stoppen sollte. Die jeweiligen prädizierten Zeitpunkte bzw. Positionen können dabei aus prädizierten Trajektorien oder aus einer analytischen Betrachtung der Fahrdynamik D1, DO des Fahrzeuges 1 bzw. des jeweiligen Objektes O hergeleitet werden.

Wird während der Bremsphase B vorausschauend festgestellt, dass der Sicherheitszeitraum dtE und/oder die Sicherheitsdistanz AE über einem jeweils zugeordneten Grenzwert liegen, so können die Maximal-Verzögerung zMax und/oder der degressive Verlauf des Ist-Rucks jlsti über die jeweiligen Teilbrems-Bereiche TBi entsprechend angepasst, insbesondere verringert werden. Dies vermeidet, dass durch eine für die Situation zu hoch angesetzte Maximal-Verzögerung zMax bzw. Ist-Ruck ilsti ein unnötig hohes Verletzungsrisiko für die Fahrgäste 2 eingegangen wird.

Ergänzend kann vorgesehen sein, dass auch sonstige unkontrollierbare Verzögerungseingriffe von Bremsmitteln des jeweiligen Bremssystems 4 vermieden werden. Dazu kann bei Erfüllen des Auslösekriteriums AK in der Bremsphase B bzw. auch bereits während des Konditionierungs-Bremsimpulses BI ein Getriebe 5 des Fahrzeuges 1 ausgekuppelt werden, so dass zwischen einem Antriebsstrang 5a des Fahrzeuges 1 und einem Abtriebsstrang 5b des Fahrzeuges 1 kein Drehmoment DM übertragen wird bzw. eine kraftschlüssige Verbindung unterbrochen ist. Dadurch werden sprunghafte Veränderungen in der Ist-Eigenverzögerung zlst1 z.B. durch das Eingreifen der Motorbremse bzw. des Schleppmoments des Motors während der Geschwindigkeitsreduktion in der Bremsphase B lediglich über die Reibungsbremsen 4b vermieden. Dies könnte zu einer unnötigen abrupten Veränderung der Ist-Eigenverzögerung zlst1 und damit zu einem unkontrollierbaren Schwanken der Fahrgäste 2 führen, die sich darauf nicht einstellen können. Diese könnten dadurch während des Bremsmanövers in der Bremsphase B stürzen. Dieses Risiko steigt drastisch sofern die Schaltphasen des Getriebes 5 bei einer hohen Ist-Eigenverzögerung zlst1 stattfinden.

Aber auch bei einer Verwendung anderer Bremsmittel, beispielsweise einer Rekuperationsbremse, kann vorteilhafterweise vorgesehen sein, dass eine Ansteuerung eines anderen Bremsmittels des Fahrzeuges 1 unterdrückt wird, um keine unkontrollierbaren, abrupten Einflüsse auf die Ist-Eigenverzögerung zlst1 zu erhalten.

Ergänzend werden vorteilhafterweise auch jegliche anderen externen Bremsanforderungen (XBR) unterdrückt, so dass das Fahrzeug 1 in der Bremsphase B auch nicht unkontrolliert über weitere Bremsmittel, z.B. einen Retarder, abrupt verzögert wird und damit eine ungewollte Veränderung der Ist-Verzögerung zlst1 in der Bremsphase B vermieden wird.

Weiterhin kann während der Bremsphase B oder auch bereits während des Konditionierungs-Bremsimpulses BI geprüft werden, ob ein Abbruch-Kriterium CK für die Abbremsung erfüllt ist (s. Fig. 2). Dies kann beispielsweise dann der Fall sein, wenn der Fahrer ein fehlerhaftes Erfüllen des Auslösekriteriums AK erkennt und manuell durch Drücken des Gaspedals eingreift. Weiterhin kann der Fahrer die Bremsung auch manuell verstärken, wenn er selbst eine Notsituation erkannt hat und er das Fahrzeug 1 so schnell wie möglich unter manueller Kontrolle Abbremsen möchte. Auch dann kann das Abbruch-Kriterium CK erfüllt sein. Das Abbruch-Kriterium CK kann aber auch dann erfüllt sein, wenn sich die Fahrsituation während der Bremsphase B entschärft und automatisiert erkannt wird, dass das Auslösekriterium AK während einer Bremsung nicht mehr erfüllt wird.

Liegt das Abbruch-Kriterium CK z.B. aufgrund eines fehlerhaften Erfüllens des Auslösekriteriums AK oder eines nicht mehr Erfüllens des Auslösekriteriums AK vor, wird die Bremsphase B oder der Konditionierungs-Bremsimpuls BI in einem Abbruch-Schritt STC kontrolliert abgebrochen, gemäß Fig. 3b beispielsweise bereits nach dem zweiten Teilbrems-Bereich TB2. Auch dabei wird der Gedanke der Erfindung verfolgt, die Kontrollierbarkeit der Bremsung für die Fahrgäste 2 so hoch wie möglich zu halten, indem keine abrupten Veränderungen in der Ist-Eigenverzögerung zlst zugelassen werden.

Dazu wird bei Erfüllen des Abbruch-Kriteriums CK gemäß Fig. 3b die Ist-Eigenverzögerung zlst1 in einem Abbruch-Teilbrems-Bereich TBC kontinuierlich abgebaut. Dies kann beispielsweise ähnlich zu dem siebenten Teilbrems-Bereich TB7 in Fig. 3a durch einen entsprechenden Abbruch-Ruck jA von beispielsweise -1,5m/s³ erfolgen, mit dem die bei Erfüllen des Abbruch-Kriteriums CK vorliegende Ist-Eigenverzögerung zlst1 kontinuierlich bis zu einem Abbruch-Zeitpunkt tC reduziert wird.

Dabei bleibt auch im Abbruch-Teilbrems-Bereich TBC der Bremsphase B das Getriebe 5 des Fahrzeuges 1 zunächst ausgekuppelt, so dass zwischen dem Antriebsstrang 5a des Fahrzeuges 1 und dem Abtriebsstrang 5b des Fahrzeuges 1 kein Drehmoment DM übertragen wird bzw. eine kraftschlüssige Verbindung unterbrochen ist. Ein Einkuppeln des Getriebes 5 erfolgt erst dann, wenn festgestellt wird, dass eine Drehzahl D5a des Antriebsstrangs 5a in etwa einer Drehzahl D5b des Abtriebsstrangs 5b entspricht, so dass durch das Einkuppeln keine abrupte Veränderung der Ist-Eigenverzögerung zlst1 auftritt.

Begleitend können bei Erfüllen des Auslösekriteriums AK in der Bremsphase B bzw. auch bereits während des Konditionierungs-Bremsimpulses BI akustische und/oder optische und/oder haptische (Vibration der Sitze) Fahrgast-Signale SP und/oder Objekt-Signale SO an die Objekte O in der Umgebung U ausgegeben werden.

### Bezugszeichenliste (Teil der Beschreibung)

- 1: Fahrzeug
- 1a: Straßenfahrzeug
- 1b: Bus
- 2: Fahrgast
- 2a: stehender Fahrgast
- 2b: nicht-angeschnallter Fahrgast
- 3: Steuereinheit
- 4: Bremssystem
- 4a: pneumatisches Bremssystem
- 5: Getriebe
- 5a: Antriebsstrang
- 5b: Abtriebsstrang
- 6: Umgebungssensorik
- 7: Fahrer
- aO: Objektbeschleunigung
- aquer: Ist-Eigenquerbeschleunigung
- aquer_p: prädizierte Eigenquerbeschleunigung
- AE: Sicherheitsdistanz
- AK: Auslösekriterium
- B: Bremsphase
- BI: Konditionierungs-Bremsimpuls
- CK: Abbruch-Kriterium
- daquer: Ist-Eigenquerbeschleunigungsänderung
- daquer_p: prädizierte Eigenquerbeschleunigungsänderung
- dK: Konditionierungszeitraum
- dtE: Sicherheitszeitraum
- dti: i. Teilbrems-Intervall
- D1: Eigenfahrdynamik
- D5a: Drehzahl des Antriebsstrangs 5a
- D5b: Drehzahl des Abtriebsstrangs 5b
- DF: Fahrbahnverlaufsdaten
- DK: Kartendaten
- DM: Drehmoment
- DO: Objektdynamik
- DP: Positionsdaten
- F: Verkehrsmittel
- FF: Fahrzeugfehler
- FR: Fahrtrichtung
- G: Gebäude
- i: Index
- jC: Abbruch-Ruck
- jlsti: i. Ist-Ruck
- jR: Ausramp-Ruck
- nf7: nicht-fahrtüchtiger Fahrer
- N: Anzahl an Teilbrems-Bereichen TBi, TBC
- O: Objekt
- P: Person
- PB: prädizierte Bremsphasen-Endposition
- PE: prädizierte Ereignis-Position
- Q: Anteil
- rA: rote Ampel
- SA: Aktivierungssignal
- SO: Objekt-Signal
- SP: Fahrgast-Signal
- SS: Stillstand
- SW: Warnsignal
- t1, t2, ..., t7: erster, zweiter, ..., siebenter Teilbrems-Zeitpunkt
- tA: Auslösezeitpunkt
- tB: prädizierter Bremsphasen-Endzeitpunkt
- tE: prädizierter Ereignis-Zeitpunkt
- tR: Ausramp-Zeitpunkt
- tS: Stillstand-Zeitpunkt
- TBi: Teilbrems-Bereich
- TBC: Abbruch-Teilbrems-Bereich
- U: Umgebung
- vlst1: Ist-Eigengeschwindigkeit
- vlstG: Grenz-Ist-Eigengeschwindigkeit
- vlenk: Lenkwinkelgeschwindigkeit
- vO: Objektgeschwindigkeit
- W: Kollisionswahrscheinlichkeit
- WG: Grenzwert
- zlst1: Ist-Eigenverzögerung
- zIstE: End-Ist-Eigenverzögerung
- zlstG: Grenz-Ist-Eigenverzögerung
- zMax: Maximal-Verzögerung
- zK: Konditionierungs-Verzögerung
- zSoll1: Soll-Eigenverzögerung
- zT1, zT2,..., zT7: erste, zweite, ..., siebente Teilbrems-Verzögerung
- ST0, ST1, ST2, ST3, STC: Schritte des Verfahrens

## Patentansprüche

1. Verfahren zum Abbremsen eines Fahrzeugs (1) zum Befördern von Fahrgästen (2), insbesondere von stehenden und/oder nicht-angeschnallten Fahrgästen (2a, 2b), mit mindestens den folgenden Schritten:
- Prüfen, ob ein Auslösekriterium (AK) zum Abbremsen des Fahrzeuges (1) zum Befördern von Fahrgästen (2) vorliegt (ST1);
- wenn das Auslösekriterium (AK) erfüllt ist, Bewirken eines Konditionierungs-Bremsimpulses (BI) durch kurzzeitiges, impulsartiges Abbremsen des Fahrzeuges (1) mit einer Dauer, die zwischen 80 und 250 ms liegt, derartig, dass die Fahrgäste (2) des Fahrzeuges (1) ein kurzzeitiges Abbremsen des Fahrzeuges (1) spüren, (ST2) und unmittelbar anschließend
- Einleiten einer Bremsphase (B) (ST3), wobei das Fahrzeug (1) in der Bremsphase (B) in mindestens zwei Teilbrems-Bereichen (TBi, TBC) durch eine sich zeitlich verändernde Ist-Eigenverzögerung (zlst1) über ein Bremssystem (4) abgebremst wird, **dadurch gekennzeichnet, dass** jeder Teilbrems-Bereich (TBi, TBC) über ein Teilbrems-Intervall (dti) ausgedehnt ist,
wobei die Teilbrems-Bereiche (TBi, TBC) zeitlich stetig ineinander übergehen, ohne dass sich die Ist-Eigenverzögerung (zIst1) abrupt verändert, und die Ist-Eigenverzögerung (zlst1) in zumindest einem der Teilbrems-Bereiche (TBi, TBC) derartig kontinuierlich über das jeweilige Teilbrems-Intervall (dti) verändert wird, dass sich in jedem Teilbrems-Bereich (TBi, TBC) ein anderer Ist-Ruck (jlsti) einstellt, und
wobei sich der Ist-Ruck (jlsti) über zumindest einige Teilbrems-Bereiche (TBi, TBC) der Bremsphase (B) degressiv verhält.

2. Verfahren nach Anspruch 1, **dadurch gekennzeichnet, dass** die Ist-Eigenverzögerung (zlst1) in dem jeweiligen Teilbrems-Bereich (TBi, TBC) derartig eingestellt wird, dass sich der Ist-Ruck (jlsti) über alle Teilbrems-Bereiche (TBi, TBC) der Bremsphase (B) degressiv verhält.

3. Verfahren nach Anspruch 1 oder 2, **dadurch gekennzeichnet, dass** die Ist-Eigenverzögerung (zlst1) in zumindest einigen Teilbrems-Bereichen (TBi) der Bremsphase (B) derartig eingestellt wird, dass der Ist-Ruck (jlsti) eines nachfolgenden Teilbrems-Bereiches (TBi) einem Anteil (Q) des Ist-Ruck (jlst(i-1)) des unmittelbar vorausgehenden Teilbrems-Bereiches (TB(i-1)) entspricht, wobei der Anteil (Q) zwischen 0,4 und 0,6 liegt, vorzugsweise 0,5 ist.

4. Verfahren nach einem der vorhergehenden Ansprüche, **dadurch gekennzeichnet, dass** der Ist-Ruck (jlsti) nach dem Bewirken des Konditionierungs-Bremsimpulses (BI) und/oder zumindest in der Bremsphase (B) kleiner als 2m/s³, vorzugsweise kleiner als 1,5m/s³, insbesondere kleiner als 1,25m/s³ ist.

5. Verfahren nach einem der vorhergehenden Ansprüche, **dadurch gekennzeichnet, dass** das Teilbrems-Intervall (dti) der jeweiligen Teilbrems-Bereiche (TBi, TBC) und/oder die Veränderung der Ist-Eigenverzögerung (zlst1) zwischen benachbarten Teilbrems-Bereichen (TBi) verändert wird, um ein degressives Verhalten des Ist-Rucks (jlsti) zu erreichen.

6. Verfahren nach einem der vorhergehenden Ansprüche, **dadurch gekennzeichnet, dass** das Fahrzeug (1) durch das Bewirken des Konditionierungs-Bremsimpulses (BI) derartig abgebremst wird, dass die Ist-Eigenverzögerung (zlst1) des Fahrzeuges (1) zumindest kurzzeitig eine Grenz-Ist-Eigenverzögerung (zlstG) erreicht, wobei die Grenz-Ist-Verzögerung (zlstG) vorzugsweise zwischen 1m/s² und 3m/s², insbesondere zwischen 1,7m/s² und 2,7m/s², liegt und wobei die Grenz-Ist-Verzögerung (zlstG) vorzugsweise fahrzeugspezifisch gewählt wird.

7. Verfahren nach einem der vorhergehenden Ansprüche, **dadurch gekennzeichnet, dass** zum Bewirken des Konditionierungs-Bremsimpulses (BI) als Soll-Eigenverzögerung (zSoll1) des Fahrzeuges (1) eine fahrzeugspezifische Konditionierungs-Verzögerung (zK) vorgegeben wird,
wobei das Bremssystem (4) des Fahrzeuges (1) über einen Konditionierungszeitraum (dK) mit der fahrzeugspezifisch vorgegebenen Konditionierungs-Verzögerung (zK) impulsartig angesteuert wird, wobei die Konditionierungs-Verzögerung (zK) beispielsweise zwischen 1m/s² und 3m/s², insbesondere zwischen 2,2m/s² und 3,2 m/s² beträgt.

8. Verfahren nach Anspruch 7, **dadurch gekennzeichnet, dass** der Konditionierungszeitraum (dK) abhängig von einer Ist-Eigengeschwindigkeit (vIst1) des Fahrzeuges (1) ist und vorzugsweise zwischen 80ms und 250ms, insbesondere zwischen 120ms und 170ms, liegt.

9. Verfahren nach einem der vorhergehenden Ansprüche, **dadurch gekennzeichnet, dass** das Fahrzeug (1) zumindest in der Bremsphase (B) lediglich über Reibungsbremsen (4b) des Bremssystems (4) des Fahrzeuges (1) abgebremst wird.

10. Verfahren nach Anspruch 9, **dadurch gekennzeichnet, dass** zwischen einem Antriebsstrang (5a) des Fahrzeuges (1) und einem Abtriebsstrang (5b) des Fahrzeuges (1) zumindest in der Bremsphase (B) kein Drehmoment (DM) übertragen wird und/oder eine kraftschlüssige Verbindung unterbrochen ist, wobei dazu vorzugsweise ein Getriebe (5) des Fahrzeuges (1) ausgekuppelt wird.

11. Verfahren nach Anspruch 10, **dadurch gekennzeichnet, dass** der Konditionierungs-Bremsimpuls (BI) und/oder die Bremsphase (B) bei Erfüllen eines Abbruchkriteriums (CK) in einem Abbruch-Teilbrems-Bereich (TBC) durch eine Reduzierung der Ist-Eigenverzögerung (zlst1) mit einem vorzugsweise konstanten Abbruch-Ruck (jC) kontrolliert abgebrochen wird (STC), ohne dass sich die Ist-Eigenverzögerung (zlst1) abrupt verändert.

12. Verfahren nach Anspruch 11, **dadurch gekennzeichnet, dass** ein Einkuppeln des Getriebes (5) bei Erfüllen des Abbruchkriteriums (CK) in dem Abbruch-Teilbrems-Bereich (TBC) vorteilhafterweise erst dann erfolgt, wenn festgestellt wird, dass eine Drehzahl (D5a) des Antriebsstrangs (5a) mit einer Drehzahl (D5b) des Abtriebsstrangs (5b) synchronisiert ist zum Verhindern, dass sich die Ist-Eigenverzögerung (zIst1) abrupt verändert.

13. Verfahren nach einem der vorhergehenden Ansprüche, **dadurch gekennzeichnet, dass** die Ist-Eigenverzögerung (zlst1) in der Bremsphase (B) derartig eingestellt wird, dass sich die Ist-Eigenverzögerung (zlst1) auf eine Maximal-Verzögerung (zMax) erhöht.

14. Verfahren nach Anspruch 13, **dadurch gekennzeichnet, dass** die Maximal-Verzögerung (zMax) und/oder der jeweilige Ist-Ruck (jlsti) im jeweiligen Teilbrems-Bereich (TBi) in Abhängigkeit mindestens eines Parameters ausgewählt werden aus der Gruppe bestehend aus:
- einer Ist-Eigenquerbeschleunigung (aquer) des Fahrzeuges (1), die bei Einleiten der Bremsphase (B) (ST3) im Fahrzeug (1) vorliegt,
- einer Ist-Eigenquerbeschleunigungsänderung (daquer) des Fahrzeuges (1), die bei Einleiten der Bremsphase (B) im Fahrzeug (1) vorliegt,
- einer prädizierten Eigenquerbeschleunigung (aquer_p) des Fahrzeuges (1),
- einer prädizierten Eigenquerbeschleunigung (daquer_p) des Fahrzeuges (1),
- einer Anzahl (N) an Teilbrems-Bereichen (TBi),
- des jeweiligen Ist-Rucks (jlsti) in den mindestens zwei Teilbrems-Bereichen (TBi),
- eines Sicherheitszeitraumes (dtE), wobei sich der Sicherheitszeitraum (dtE) aus einer Differenz aus einem prädizierten Bremsphasen-Endzeitpunkt (tB) und einem prädizierten Ereignis-Zeitpunkt (tE) ergibt, und
- einer Sicherheitsdistanz (AE), wobei sich die Sicherheitsdistanz (AE) aus einer Differenz aus einer prädizierten Bremsphasen-Endposition (PB) und einer prädizierten Ereignis-Position (PE) ergibt,
gewählt und/oder angepasst werden.

15. Verfahren nach Anspruch 14, **dadurch gekennzeichnet, dass** die prädizierte Eigenquerbeschleunigung (aquer_p) des Fahrzeuges (1) und/oder die prädizierte Eigenquerbeschleunigungsänderung (daquer_p) des Fahrzeuges (1) in Abhängigkeit einer Lenkwinkel-Geschwindigkeit (vlenk) und/oder in Abhängigkeit von Positionsdaten (DP), vorzugsweise kombiniert mit Kartendaten (DK) und/oder in Abhängigkeit von sensorisch erfassten Fahrbahnverlaufsdaten (DF), vorausschauend abgeschätzt wird.

16. Verfahren nach einem der vorhergehenden Ansprüche, **dadurch gekennzeichnet, dass** die Ist-Eigenverzögerung (zlst1) des Fahrzeuges (1) in der Bremsphase (B) ab einem Ausramp-Zeitpunkt (tR) mit einem konstanten Ausramp-Ruck (jR) von beispielsweise -1,5m/s³ reduziert wird.

17. Verfahren nach Anspruch 16, **dadurch gekennzeichnet, dass** der Ausramp-Zeitpunkt (tR) derartig gewählt wird, dass das Fahrzeug (1) bei einer Reduzierung der Ist-Eigenverzögerung (zlst1) mit dem konstanten Ausramp-Ruck (jR) zu einem Stillstand-Zeitpunkt (tS) unmittelbar vor dem Stillstand (SS) des Fahrzeuges (1) eine vorgegebene End-Ist-Eigenverzögerung (zIstE) von beispielsweise 1m/s² erreicht.

18. Verfahren nach Anspruch 16 oder 17, **dadurch gekennzeichnet, dass** der Ausramp-Zeitpunkt (tR) abhängig von der Ist-Eigengeschwindigkeit (vIst1) und/oder der Ist-Eigenverzögerung (zlst1) ist.

19. Verfahren nach einem der vorhergehenden Ansprüche, **dadurch gekennzeichnet, dass** das Auslösekriterium (AK) erfüllt ist, wenn
- eine ermittelte Kollisionswahrscheinlichkeit (W) des Fahrzeuges (1) mit einem Objekt (O) über einem vorgegebenen Grenzwert (WG) liegt, oder
- ein vorgegebenes Auslösesignal (SA) vorliegt, das beispielsweise auf eine rote Ampel (rA) oder einen nicht fahrtüchtigen Fahrer (nf7) oder einen schwerwiegenden Fahrzeugfehler (FF) hinweist.

20. Verfahren nach einem der vorhergehenden Ansprüche, **dadurch gekennzeichnet, dass** sich die Ist-Eigenverzögerung (zIst1) zwischen dem Konditionierungs-Bremsimpuls (BI) und der Bremsphase (B) nicht abrupt verändert, wobei der Konditionierungs-Bremsimpuls (BI) bei einer Ist-Eigenverzögerung (zlst1) von zwischen 0,1m/s² und 2m/s², vorzugsweise bei zwischen 0,5m/s² und 1,5m/s², insbesondere bei 1m/s², in die Bremsphase (B) unmittelbar übergeht.

21. Steuereinheit (3) zur Steuerung eines Bremssystems (4, 4a) eines Fahrzeuges (1), **dadurch gekennzeichnet, dass** die Steuereinheit (3) angepasst ist das Bremssystem (4, 4a) so zu steuern, dass ein Verfahren nach einem der vorhergehenden Ansprüche ausgeführt wird.

22. Fahrzeug (1) zum Befördern von Fahrgästen (2), insbesondere von stehenden und/oder nicht-angeschnallten Fahrgästen (2a, 2b), mit einer Steuereinheit (3) nach Anspruch 21, wobei das Fahrzeug (1) ein Straßenfahrzeug (1a), beispielsweise ein Bus (1b), ist und ein Bremssystem (4), vorzugsweise ein pneumatisches Bremssystem (4a), aufweist.

## Claims

1. A method of braking a vehicle (1) for transporting passengers (2), in particular standing and/or non-belted-in passengers (2a, 2b), comprising at least the following steps:
- checking whether there is a trigger criterion (AK) for braking the vehicle (1) to carry passengers (2) (ST1);
- if the triggering criterion (AK) is fulfilled, effecting a conditioning braking pulse (BI) by brief, pulse-like braking of the vehicle (1) with a duration which is between 80 and 250 ms, in such a manner that the passengers (2) of the vehicle (1) feel a brief braking of the vehicle (1), (ST2) and immediately thereafter
- initiating a braking phase (B) (ST3), the vehicle (1) being braked in the braking phase (B) in at least two partial braking areas (TBi, TBC) by a time-varying actual self-deceleration (zlst1) via a braking system (4), **characterized in that** each partial braking area (TBi, TBC) is extended over a partial braking interval (dti), the partial braking areas (TBi, TBC) merge continuously in time without the actual inherent deceleration (zlst1) changing abruptly, and the actual inherent deceleration (zlst1) in at least one of the partial braking areas (TBi, TBC) is changed continuously over the respective partial braking interval (dti) in such a manner that a different actual jerk (jlsti) is produced in each partial braking area (TBi, TBC), and
where the actual jerk (jIsti) is degressive over at least some partial braking areas (TBi, TBC) of the braking phase (B).

2. The method according to claim 1, **characterized in that** the actual inherent deceleration (zlst1) in the respective partial braking area (TBi, TBC) is set in such a manner that the actual jerk (jlsti) behaves degressively over all partial braking areas (TBi, TBC) of the braking phase (B).

3. The method according to claim 1 or 2, **characterized in that** the actual inherent deceleration (zlst1) in at least some partial braking areas (TBi) of the braking phase (B) is set in such a manner that the actual jerk (jIsti) of a subsequent partial braking area (TBi) corresponds to a proportion (Q) of the actual jerk (jlst(i-1)) of the immediately preceding partial braking area (TB(i-1)), the proportion (Q) being between 0.4 and 0.6, preferably 0.5.

4. The method according to any of the preceding claims, **characterized in that** the actual jerk (jIsti) after the conditioning braking pulse (BI) has been applied and/or at least in the braking phase (B) is less than 2m/s³, preferably less than 1.5 m/s³, in particular less than 1.25 m/s³.

5. The method according to any of the preceding claims, **characterized in that** the partial braking interval (dti) of the respective partial braking areas (TBi, TBC) and/or the variation of the actual self-deceleration (zIst1) between adjacent partial braking areas (TBi) is varied to achieve a degressive behavior of the actual jerk (jIsti).

6. The method according to any of the preceding claims, **characterized in that** the vehicle (1) is decelerated by causing the conditioning braking pulse (BI) in such a manner that the actual deceleration (zIst1) of the vehicle (1) reaches a limit actual deceleration (zIstG) at least for a short time, wherein the limit actual deceleration (zIstG) is preferably between 1 m/s² and 3m/s², in particular between 1.7 m/s² and 2.7 m/s², and wherein the limit actual deceleration (zIstG) is preferably selected specifically for the vehicle.

7. The method according to any of the preceding claims, **characterized in that** a vehicle-specific conditioning deceleration (zK) is specified as the setpoint inherent deceleration (zSoll1) of the vehicle (1) in order to effect the conditioning brake pulse (BI),
wherein the braking system (4) of the vehicle (1) is actuated in a pulse-like manner over a conditioning period (dK) with the conditioning deceleration (zK) predetermined specifically for the vehicle, wherein the conditioning deceleration (zK) is, for example, between 1 m/s² and 3 m/s², in particular between 2.2 m/s² and 3.2 m/s².

8. The method according to claim 7, **characterized in that** the conditioning period (dK) is dependent on an actual own speed (vIst1) of the vehicle (1) and is preferably between 80 ms and 250 ms, in particular between 120 ms and 170 ms.

9. The method according to any of the preceding claims, **characterized in that** the vehicle (1) is braked only via friction brakes (4b) of the braking system (4) of the vehicle (1) at least in the braking phase (B).

10. The method according to claim 9, **characterized in that** no torque (DM) is transmitted between a drive train (5a) of the vehicle (1) and an output train (5b) of the vehicle (1) at least in the braking phase (B) and/or a non-positive connection is interrupted, a transmission (5) of the vehicle (1) preferably being disengaged for this purpose.

11. The method according to claim 10, **characterized in that** the conditioning braking pulse (BI) and/or the braking phase (B) is terminated (STC) in a controlled manner by a reduction of the actual self-deceleration (zlst1) with a preferably constant termination jerk (jC) when a termination criterion (CK) is met in a termination partial braking area (TBC), without the actual self-deceleration (zlst1) changing abruptly.

12. The method according to claim 11, **characterized in that** engagement of the transmission (5) upon fulfillment of the abort criterion (CK) in the abort partial brake range (TBC) advantageously occurs only when it is determined that a rotational speed (D5a) of the input train (5a) is synchronized with a rotational speed (D5b) of the output train (5b) for preventing the actual self-deceleration (zIst1) from abruptly changing.

13. The method according to any of the preceding claims, **characterized in that** the actual self-deceleration (zlst1) in the braking phase (B) is adjusted in such a manner that the actual self-deceleration (zlst1) increases to a maximum deceleration (zMax).

14. The method according to claim 13, **characterized in that** the maximum deceleration (zMax) and/or the respective actual jerk (jlsti) in the respective partial braking area (TBi) are selected as a function of at least one parameter from the group consisting of:
- an actual lateral acceleration (aquer) of the vehicle (1) which is present in the vehicle (1) when the braking phase (B) (ST3) is initiated,
- an actual transverse acceleration change (daquer) of the vehicle (1) that is present in the vehicle (1) when the braking phase (B) is initiated,
- a predicted intrinsic lateral acceleration (aquer_p) of the vehicle (1),
- a predicted intrinsic lateral acceleration (daquer_p) of the vehicle (1),
- a number (N) of partial braking areas (TBi),
- of the respective actual jerk (jlsti) in the at least two partial braking areas (TBi),
- of a safety period (dtE), wherein the safety period (dtE) results from a difference between a predicted braking phase end time (tB) and a predicted event time (tE),
and
- a safety distance (AE), wherein the safety distance (AE) results from a difference between a predicted braking phase end position (PB) and a predicted event position (PE).

15. The method according to claim 14, **characterized in that** the predicted intrinsic lateral acceleration (aquer_p) of the vehicle (1) and/or the predicted intrinsic lateral acceleration change (daquer_p) of the vehicle (1) is estimated in advance as a function of a steering angle speed (vlenk) and/or as a function of position data (DP), preferably combined with map data (DK), and/or as a function of road course data (DF) detected by sensors.

16. The method according to any of the preceding claims, **characterized in that** the actual self-deceleration (zlst1) of the vehicle (1) in the braking phase (B) is reduced from an off-ramp time (tR) with a constant off-ramp jerk (jR) of, for example, - 1.5 m/s³.

17. The method according to claim 16, **characterized in that** the ramp-out time (tR) is selected in such a manner that the vehicle (1) reaches a predetermined final actual deceleration (zIstE) of, for example, 1 m/s² at a standstill time (tS) immediately before the vehicle (1) comes to a standstill (SS) when the actual deceleration (zlst1) is reduced with the constant ramp-out jerk (jR).

18. The method according to claim 16 or 17, **characterized in that** the ramp-out time (tR) is dependent on the actual intrinsic speed (vIst1) and/or the actual intrinsic deceleration (zlst1).

19. The method according to any of the preceding claims, **characterized in that** the triggering criterion (AK) is satisfied when
- a determined collision probability (W) of the vehicle (1) with an object (O) is above a predetermined limit value (WG), or
- a predetermined trigger signal (SA) is present, indicating, for example, a red light (rA) or an unroadworthy driver (nf7) or a serious vehicle fault (FF).

20. The method according to any of the preceding claims, **characterized in that** the actual inherent deceleration (zlst1) does not change abruptly between the conditioning braking pulse (BI) and the braking phase (B), the conditioning braking pulse (BI) transitioning directly into the braking phase (B) at an actual inherent deceleration (zlst1) of between 0.1 m/s² and 2 m/s², preferably at between 0.5 m/s² and 1.5 m/s², in particular at 1 m/s².

21. A control unit (3) for controlling a braking system (4, 4a) of a vehicle (1), **characterized in that** the control unit (3) is adapted to control the braking system (4, 4a) in such a manner that a method according to any of the preceding claims is executed.

22. A vehicle (1) for transporting passengers (2), in particular standing and/or non-belted-in passengers (2a, 2b), comprising a control unit (3) according to claim 21, wherein the vehicle (1) is a road vehicle (1a), for example a bus (1b), and comprises a braking system (4), preferably a pneumatic braking system (4a).

## Revendications

1. Procédé de freinage d'un véhicule (1) destiné à transporter des passagers (2), en particulier de passagers debout et/ou non ceinturés (2a, 2b), comportant au moins les étapes suivantes :
- vérification de l'existence (ST1) d'un critère de déclenchement (AK) de freinage du véhicule (1) destiné à transporter des passagers (2) ;
- lorsque le critère de déclenchement (AK) est rempli, induction d'une impulsion de freinage de conditionnement (BI) par un freinage de courte durée et par impulsions du véhicule (1) avec une durée située entre 80 et 250 ms, de telle sorte que les passagers (2) du véhicule (1) ressentent (ST2) un freinage de courte durée du véhicule (1), et immédiatement après
- introduction (ST3) d'une phase de freinage (B), dans lequel, dans la phase de freinage (B) le véhicule (1) est freiné, par l'intermédiaire d'un système de freinage (4) par une auto-décélération réelle (zlst1) variant dans le temps, dans au moins deux plages de freinage partiel (TBi, TBC), **caractérisé en ce que** chaque plage de freinage partiel (TBi, TBC) est étendu par sur un intervalle de freinage partiel (dti), dans lequel les plages de freinage partiel (TBi, TBC) se confondent de façon continue dans le temps sans que la auto-décélération réelle (zlst1) ne soit modifiée de façon brusque, et la auto-décélération réelle (zlst1) est modifiée de façon continue sur l'intervalle de freinage partiel (dti) respectif dans au moins l'un des plages de freinage partiel (TBi, TBC), de telle sorte qu'un autre à-coup réel (jlsti) se produit dans chaque plage de freinage partiel (TBi, TBC), et
dans lequel l'à-coup réel (jlsti) agit de manière dégressive sur au moins certains plages de freinage partiel (TBi, TBC) de la phase de freinage (B).

2. Procédé selon la revendication 1, **caractérisé en ce que** la auto-décélération réelle (zlst1) est réglée dans le plage de freinage partiel (TBi, TBC) respectif de telle sorte que l'à-coup réel (jlsti) agit de manière dégressive sur tous les plages de freinage partiel (TBi, TBC) de la phase de freinage (B).

3. Procédé selon la revendication 1 ou 2, **caractérisé en ce que** la auto-décélération réelle (zlst1) est réglée dans au moins certains plages de freinage partiel (TBi) de la phase de freinage (B) de telle sorte que l'à-coup réel (jlsti) d'un plage de freinage partiel (TBi) suivant correspond à une proportion (Q) de l'à-coup réel (jIst(i-1)) du plage de freinage partiel (Tb(i-1)) précédant immédiatement, dans lequel la proportion (Q) est située entre 0,4 et 0,6, et est de préférence de 0,5.

4. Procédé selon l'une des revendications précédentes,
**caractérisé en ce que** l'à-coup réel (jlsti) est inférieur à 2 m/s³, de préférence inférieur à 1,5 m/s³, en particulier inférieur à 1,25 m/s³, après l'induction de l'impulsion de freinage de conditionnement (BI) et/ou au moins dans la phase de freinage (B).

5. Procédé selon l'une des revendications précédentes,
**caractérisé en ce que** l'intervalle de freinage partiel (dti) des plages de freinage partiel (TBi, TBC) respectifs et/ou la modification de la auto-décélération réelle (zlst1) entre des plages de freinage partiel (TBi) adjacents est modifié(e) pour parvenir à un comportement dégressif de l'à-coup réel (jlsti).

6. Procédé selon l'une des revendications précédentes,
**caractérisé en ce que** le véhicule (1) est freiné par l'induction de l'impulsion de freinage de conditionnement (BI) de telle sorte que la auto-décélération réelle (zlst1) du véhicule (1) atteint au moins pendant une courte durée une auto-décélération réelle limite (zlstG), dans lequel la décélération réelle limite (zlstG) est située de préférence entre 1 et 3 m/s², en particulier entre 1,7 et 2,7 m/s², et dans lequel la décélération réelle limite (zlstG) est choisie de préférence en fonction du véhicule.

7. Procédé selon l'une des revendications précédentes,
**caractérisé en ce qu'**une décélération de conditionnement (zK) est prédéfinie comme auto-décélération de consigne (zSoll1) du véhicule (1) pour l'induction de l'impulsion de freinage de conditionnement (BI),
dans lequel, pendant une période de conditionnement (dK), le système de freinage (4) du véhicule (1) est commandé par impulsions avec la décélération de conditionnement (zK) prédéfinie en fonction du véhicule, dans lequel la décélération de conditionnement (zK) est située par exemple entre 1 et 3 m/s², en particulier entre 2,2 et 3,2 m/s².

8. Procédé selon la revendication 7, **caractérisé en ce que** la période de conditionnement (dK) dépend d'une vitesse propre réelle (vlst1) du véhicule (1) et se situe de préférence entre 80 et 250 ms, en particulier entre 120 et 170 ms.

9. Procédé selon l'une des revendications précédentes,
**caractérisé en ce que,** au moins dans la phase de freinage (B), le véhicule (1) est freiné uniquement par des freins à friction (4b) du système de freinage (4) du véhicule (1).

10. Procédé selon la revendication 9, **caractérisé en ce que,** au moins dans la phase de freinage (B), aucun couple (DM) n'est transmis entre la ligne d'entraînement (5a) du véhicule (1) et une ligne de sortie (5b) du véhicule (1) et/ou une liaison de force est interrompue, dans lequel, pour ce faire, de préférence une boîte de vitesses (5) du véhicule (1) est découplée.

11. Procédé selon la revendication 10, **caractérisé en ce que,** lorsqu'un critère d'interruption (CK) est rempli dans un plage de freinage partiel d'interruption (TBC), l'impulsion de freinage de conditionnement (BI) et/ou la phase de freinage (B) est interrompue (STC) de manière commandée par une réduction de la auto-décélération réelle (zlst1) avec un à-coup d'interruption (jC) de préférence constant, sans que la auto-décélération réelle (zlst1) ne soit modifiée de façon brusque.

12. Procédé selon la revendication 11, **caractérisé en ce que,** lorsqu'un critère d'interruption (CK) est rempli dans le plage de freinage partiel d'interruption (TBC), un couplage de la boîte de vitesses (5) ne se produit de manière avantageuse que lorsqu'il est déterminé qu'une vitesse de rotation (D5a) de la ligne d'entraînement (5a) est synchronisée avec une vitesse de rotation (D5b) de la ligne de sortie (D5b)pour empêcher une modification brusque de la auto-décélération réelle (zlst1).

13. Procédé selon l'une des revendications précédentes,
**caractérisé en ce que** la auto-décélération réelle (zlst1) est réglée dans la phase de freinage (B) de telle sorte que la auto-décélération réelle (zlst1) augmente à une décélération maximale (zMax).

14. Procédé selon la revendication 13, **caractérisé en ce que** la décélération maximale (zMax) et/ou l'à-coup réel (jlsti) respectif sont choisis dans le plage de freinage partiel (Tbi) respectif en fonction d'au moins un paramètre choisi dans le groupe constitué par :
- une accélération transversale propre réelle (aquer) du véhicule (1), laquelle est présente lors de l'introduction (ST3) de la phase de freinage (B) dans la véhicule (1),
- une modification d'accélération transversale propre réelle (daquer) du véhicule (1), laquelle est présente lors de l'introduction de la phase de freinage (B) dans la véhicule (1),
- une accélération transversale propre (aquer_p) prédite du véhicule (1),
- une accélération transversale propre (daquer_p) prédite du véhicule (1),
- un nombre (N) de plages de freinage partiel (TBi),
- l'à-coup réel (jlsti) respectif dans les au moins deux plages de freinage partiel (TBi),
- une période de sécurité (dtE), dans lequel la période de sécurité (dtE) est obtenue à partir d'une différence entre un moment final de phase de freinage (tB) et un moment d'événement (tE) prédit,
et
- une distance de sécurité (AE), dans lequel la distance de sécurité (AE) est obtenue, à partir d'une différence entre une position finale de phase de freinage (PB) et une position d'événement (PE) prédite, puis choisis et/ou ajustés.

15. Procédé selon la revendication 14, **caractérisé en ce que** l'accélération transversale propre réelle (aquer) du véhicule (1) et/ou la modification d'accélération transversale propre réelle (daquer) du véhicule (1) sont estimées de manière proactive en fonction d'une vitesse angulaire du volant (vlenk) et/ou en fonction de données de position (DP), de préférence combinées avec des données cartographiques (DK), et/ou en fonction de données de tracé de chaussée (DF) détectées par un capteur.

16. Procédé selon l'une des revendications précédentes,
**caractérisé en ce que** la auto-décélération réelle (zlst1) du véhicule (1) dans la phase de freinage (B) est réduite à partir d'un moment de rampe de sortie (tR) avec un à-coup de rampe de sortie (jR) constant de -1,5 m/s³ par exemple.

17. Procédé selon la revendication 16, **caractérisé en ce que** le moment de rampe de sortie (tR) est choisi de telle sorte que le véhicule (1), en cas de réduction de la auto-décélération réelle (zlst1) avec l'à-coup de rampe de sortie (jR) constant à un moment d'arrêt (tS) immédiatement avant l'arrêt (SS) du véhicule (1), atteint une auto-décélération réelle finale (zlstE) prédéfinie de 1m/s² par exemple.

18. Procédé selon la revendication 16 ou 17, **caractérisé en ce que** le moment de rampe de sortie (tR) dépend de la vitesse propre réelle (vlst1) et/ou de la décélération réelle (zlst1).

19. Procédé selon l'une des revendications précédentes,
**caractérisé en ce que** le critère de déclenchement (AK) est rempli
- lorsqu'une probabilité de collision (W) déterminée du véhicule (1) avec un objet (O) dépasse une valeur limite (WG) prédéfinie, ou
- lorsqu'un signal de déclenchement (SA) prédéfini existe, lequel indique par exemple une lumière rouge (rA) ou un conducteur non compétent (nf7) ou une panne grave du véhicule (FF).

20. Procédé selon l'une des revendications précédentes,
**caractérisé en ce que** la auto-décélération réelle (zlst1) entre l'impulsion de freinage de conditionnement (BI) et la phase de freinage (B) n'est pas modifiée de façon brusque, dans lequel l'impulsion de freinage de conditionnement (BI) passe immédiatement dans la phase de freinage (B) en cas d'une auto-décélération réelle (zlst1) entre 0,1 et 2 m/s², de préférence entre 0,5 et 1,5 m/s², en particulier de 1 m/s².

21. Unité de commande (3) pour la commande d'un système de freinage (4, 4a) d'un véhicule (1), **caractérisée en ce que** l'unité de commande (3) est conçue pour commander le système de freinage (4, 4a) de telle sorte qu'un procédé selon l'une des revendications précédentes est mis en oeuvre.

22. Véhicule (1) destiné à transporter des passagers (2), en particulier de passagers debout et/ou non ceinturés (2a, 2b), comportant une unité de commande (3) selon la revendication 21, dans lequel le véhicule (1) est un véhicule de type routier (1a), par exemple un bus (1b), et présente un système de freinage (4), de préférence un système de freinage pneumatique (4a).
